# EUROPEAN PATENT APPLICATION

(11) **EP 2 755 392 A2**
(43) Date of publication of application: **16.07.2014**
(21) Application number: 14150655.0
(22) Date of filing: 09.01.2014
(51) Int. Cl.: H04N 13/04

(54) **Display apparatus, shutter glasses, display method, and method for operating glasses apparatus**

(30) Priority: 09.01.2013 KR 20130002480
(71) Applicant: Samsung Electronics Co., Ltd, Gyeonggi-do 443-742 (KR)
(72) Inventor: Park, Jae-sung, Seoul (KR); Song, Myoung-jong, Gyeonggi-do (KR); Min, Kwan-sik, Gyeonggi-do (KR)
(74) Representative: Taor, Simon Edward William

(57) **Abstract**

A glasses apparatus is provided. The glasses apparatus includes: a first retarder which delays phases of a first image and a second image which are output from a display apparatus, a second retarder which delays the phases of the first image and the second image in a direction different from that of the first retarder, a first shutter glass and a second shutter glass which change polarization properties of the first image and the second image, optical axes of which are rotated according to whether power is supplied or not, and a controller which controls to selectively supply the power to the first shutter glass and the second shutter glass so that a user selectively views the first image and the second image.

## Description

Methods and apparatuses consistent with exemplary embodiments relate to a display apparatus of a pattern retarder method, and more particularly, to a display apparatus of a pattern retarder method, which is connected with a glasses apparatus and displays a multi-view or 3D image, a glasses apparatus, a display method, and a method for operating a glasses apparatus.

With the development of electronic technologies, various kinds of electronic apparatuses have been developed and distributed. In particular, a display apparatus such as a television (TV) is used as a representative electronic apparatus.

As the performance of the display apparatus has been improved, the display apparatus can display various kinds of contents. In particular, a stereoscopy display system, which allows users to view a 3D content, has been developed and distributed.

The stereoscopy display apparatus may be implemented by using various types of display apparatuses such as a monitor, a mobile phone, a personal digital assistant (PDA), a personal computer (PC), a set-top box, a tablet PC, an electronic album, and a kiosk, as well as a 3D TV used in general households.

The 3D display technology may be utilized in various fields that require 3D imaging such as science, medicine, design, education, advertisement, and computer games, as well as in general households.

The stereoscopy display system may be generally divided into a non-glasses type system in which users can view a stereoscopic image without glasses, and a glasses type system in which users can view images with glasses.

The non-glasses type system may be referred to as an auto stereoscopy system. A 3D display apparatus of a non-glasses method displays a multi-view image which is spatially shifted, while allowing light corresponding to images of different points of time to be projected onto user's left eye and right eye using parallax barrier technology or a lenticular lens, so that the user feels a sense of depth.

The non-glasses type system has an advantage of low manufacturing cost since glasses are not required to view a 3D image, but has disadvantages of an incomplete sense of depth and a limited viewing zone.

The glasses type system is provided with a separate glasses apparatus for viewing the display apparatus. The glasses apparatus is divided into an active glasses apparatus and a passive glasses apparatus.

If the active glasses apparatus is used, the display apparatus alternately outputs a left-eye image and a right-eye image, and the active glasses apparatus that the user wears alternately opens and closes left and right shutter glasses in synchronization with an output timing of the left-eye image and the right-eye image of the display apparatus. The user views only the left-eye image through his/her left eye and views only the right-eye image through his/her right eye, and feels a sense of depth due to a difference in depth between the left-eye image and the right-eye image.

On the other hand, if the passive glasses apparatus is used, the display apparatus sets polarization differently using a polarizing panel having a different optical axis in each region of a display image. This method is called a pattern retarder method. In this method, the polarizing panel includes a pattern retarder.

The passive glasses apparatus may include a wavelength delay plate to allow only an image of a specific pattern region of the pattern retarder to pass therethrough. That is, a left-eye lens of the passive glasses apparatus includes a first wavelength delay plate of a direction opposite a first pattern region, and a second lens includes a second wavelength delay plate of a direction opposite a second pattern region. The first wavelength delay plate compensates for an image by delaying a phase of an image wavelength which has been delayed by the first pattern region in the opposite direction. On the other hand, since the first wavelength delay plate further delays a phase of an image wavelength which has been delayed by the second pattern region in the same direction, the first wavelength delay plate rotates an optical axis of polarized light. The left-eye lens further includes a polarizing filter of a specific optical axis besides the first wavelength delay plate. The polarizing filter blocks an image that has an optical axis perpendicular to the polarizing filter from among the images passing through the first wavelength delay plate. As a result, the left-eye lens allows only the image of the first pattern region to pass therethrough.

Similarly, the second wavelength delay plate compensates for an image by delaying a phase of an image wavelength which has been delayed by the second pattern region in the opposite direction. On the other hand, since the second wavelength delay plate further delays a phase of an image wavelength which has been delayed by the first pattern region in the same direction, the second wavelength delay plate rotates an optical axis of polarized light. The right-eye lens may further include a polarizing filter of a specific optical axis besides the second wavelength delay plate. The polarizing filter blocks an image having an optical axis perpendicular to the polarizing filter from among images passing through the second wavelength delay plate. As a result, the right-eye lens allows only the image of the second pattern region to pass therethrough.

As a result, the user who wears the passive glasses apparatus views only the left-eye image through his/her left eye and views only the right-eye image through his/her right eye, and may feel a sense of depth due to a difference in depth between the left-eye image and the right-eye image.

The glasses type stereoscopy image display system described above may be used in a multi-view environment in which a plurality of persons view a plurality of contents respectively.

If the above-described active shutter glasses method is used in a multi-view system, the display apparatus alternately outputs an image frame of a first content and an image frame of a second content. A glasses apparatus of the user has a left-eye shutter glass and a right-eye shutter glass turned on or off simultaneously in synchronization with output timings of the image frame of the first content and the image frame of the second content of the display apparatus.

For example, when a first user views the first content, the glasses apparatus of the first user turns on the left-eye and right-eye shutter glasses simultaneously when the display apparatus displays the image frame of the first content, and turns off the left-eye and right-eye shutter glasses simultaneously when the display apparatus displays the image frame of the second content. On the other hand, when a second user views the second content, the glasses apparatus of the second user turns off the left-eye and right-eye shutter glasses simultaneously when the display apparatus displays the image frame of the first content, and turns on the left-eye and right-eye shutter glasses simultaneously when the display apparatus displays the image frame of the second content. Since the shutter glasses are turned on or off in a very short time and an after-image of a viewed image remains on user's retina while an unviewed image is blocked, the user may recognize the image as being naturally displayed.

The passive glasses apparatus may also be used in a multi-view system. A left-eye lens and a right-eye lens of a first passive glasses apparatus may include a first wavelength delay plate of a direction opposite a first pattern region. The first wavelength delay plate compensates for an image by delaying a phase of an image wavelength which has been delayed by the first pattern region in the opposite direction. On the other hand, since the first wavelength delay plate further delays a phase of an image wavelength which has been delayed by the second patter region in the same direction, the first wavelength delay plate rotates an optical axis of polarized light. The left-eye lens and the right-eye lens further include a polarizing filter of a specific optical axis instead of the first wavelength delay plate. The polarizing filter blocks an image that has an optical axis perpendicular to the polarizing filter from among images passing through the first wavelength delay plate. As a result, the first passive glasses apparatus allows only the image of the first pattern region to pass therethrough.

On the other hand, a left-eye lens and a right-eye lens of a second passive glasses apparatus include a second wavelength delay plate of a direction opposite the second pattern region, and compensate for an image by delaying a phase of an image wavelength which has been delayed by the second pattern region. On the other hand, since the second wavelength delay plate further delays the phase of the image wavelength which has been delayed by the first pattern region in the same direction, the second wavelength delay plate rotates an optical axis of polarized light. The left-eye lens and the right-eye lens of the second passive glasses apparatus further include a polarizing filter of a specific optical axis instead of the second wavelength delay plate. The polarizing filter blocks only an image that has an optical axis perpendicular to the polarizing filter from among images passing through the second wavelength delay plate. As a result, the second passive glasses apparatus allows only the image of the second pattern region to pass therethough.

The passive glasses apparatus requires a lens that has a wavelength delay plate or a polarizing filter having its direction changed according to whether the user views a 3D image or a multi-view image. That is, in the case of a 3D image, polarization properties of the left eye and the right eye are different, whereas, in the case of a 2D image, the polarization property of the left eye and the right eye are the same but is different with respect to each content. Therefore, it is impossible to view both the 3D image and the multi-view image with one passive glasses apparatus. As a result, the user should replace the glasses apparatus according to the type of content.

Also, if separate audio receiving and outputting means are not provided, the plurality of users viewing different contents in a multi-view environment have no choice but to hear the same sound output from the display apparatuses.

In addition, there is a demand for a method for a plurality of users to view a plurality of different 3D contents through glasses apparatuses in a display apparatus of a pattern retarder method.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a display apparatus, a glasses apparatus, a display method, and a method for operating a glasses apparatus, which can allow a user to view 2D, 3D, and multi 3D images using a single glasses apparatus and allow a user to hear sound of each content in a multi-view display mode.

According to an aspect of an exemplary embodiment, there is provided a glasses apparatus comprising: a first retarder configured to delay phases of a first image and a second image which are output from a display apparatus; a second retarder configured to delay the phases of the first image and the second image in a direction different from that of the first retarder; a first shutter glass and a second shutter glass configured to change polarization properties of the first image optical axis and the second image optical axis which are rotated according to whether power is supplied or not; and a controller configured to control to selectively supply the power to the first shutter glass and the second shutter glass so that a user selectively views the first image and the second image. The first image and the second image may be output from the display apparatus simultaneously.

The first shutter glass and the second shutter glass may include, respectively: a first liquid crystal cell and a second liquid crystal cell which have their orientations switched when the power is supplied, and allow the first image and the second image the optical axes of which are rotated to pass therethrough according to the switched orientations; and a first polarizer and a second polarizer which polarize images passing through the first liquid crystal cell and the second liquid crystal cell, respectively.

The glasses apparatus may further include: a communicator configured to receive an audio signal from the display apparatus; and an audio outputter configured to output the received audio signal.

The glasses apparatus may further comprise a communicator configured to receive a sync signal from the display apparatus, and the controller may control to selectively supply the power to the first shutter glass and the second shutter glass according to the received sync signal.

When the display apparatus displays a plurality of 2D contents, the controller may control to receive an audio signal of a 2D content corresponding to the glasses apparatus from among the plurality of 2D contents, and output the received audio signal through the audio outputter.

When the display apparatus displays a plurality of 2D contents, the controller may control to supply power only to one from among the first shutter glass and the second shutter glass.

When the display apparatus displays a single 3D content, the controller may control to supply power to both the first shutter glass and the second shutter glass, or not to supply power.

When the display apparatus displays a plurality of 3D contents, according to the received sync signal, the controller may control to perform a first operation and a second operation which supply power to the first shutter glass and the second shutter glass, respectively; a third operation which does not supply power to the first shutter glass and supplies power to the second shutter glass; and a fourth operation which supplies power to the first shutter glass and does not supply power to the second shutter glass, in sequence.

When the display apparatus displays a plurality of 3D contents, according to the received sync signal, the controller may control to perform a first operation which supplies power to the first shutter glass and the second shutter glass; a second operation which does not supply power to the first shutter glass and the second shutter glass, and a third operation and a fourth operation which do not supply power to the first shutter glass and supply power to the second shutter glass, respectively.

When the display apparatus displays a plurality of 3D contents, the controller may control to receive an audio signal of a 3D content corresponding to the glasses apparatus from among the plurality of 3D contents, and output the received audio signal through the audio outputter.

The glasses apparatus may further comprise an inputter configured to receive user input, and the controller may control to identify a display mode of the display apparatus according to the received user input, and receive at least one from among a sync signal and an audio signal according to the identified display mode. The controller may control to selectively supply the power to the first shutter glass and the second shutter glass.

According to an aspect of another exemplary embodiment, there is provided a display apparatus comprising: a signal processor which configures an image frame according to a display mode; a display configured to output the image frame configured by the signal processor; a pattern retarder configured to polarize the output image frame differently in each region; a communicator configured to transmit at least one from among a sync signal and an audio signal to a glasses apparatus, the glasses apparatus allowing a user to view the image frame polarized differently in each region; and a controller configured to control to transmit at least one from among a sync signal and an audio signal to the glasses apparatus according to the display mode, wherein the display mode is one from among a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

According to an aspect of still another exemplary embodiment, there is provided a method for operating a glasses apparatus, the method comprising: rotating optical axes of a first image and a second image which are output from a display apparatus, in different directions; and selectively supplying power to a first shutter glass and a second shutter glass and changing polarization properties of the first image and the second image, the optical axes of which are rotated.

The method may further comprise: receiving an audio signal from the display apparatus; and outputting the received audio signal.

According to an aspect of still another exemplary embodiment, there is provided a display method comprising: configuring an image frame according to a display mode; outputting the configured image frame; polarizing the output image frame differently in each region; and transmitting at least one from among a sync signal and an audio signal to a glasses apparatus according to the display mode, the glasses apparatus allowing a user to view the image frame polarized differently in each region.

The display mode may be one from among a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

The polarizing may comprise left circularly polarizing a first region of the output image frame, and right circularly polarizing a second region.

When the display mode is the 2D multi view mode, a first region of the image frame may indicate a first 2D content image and a second region may indicate a second 2D content image, and the transmitting may include transmitting an audio signal corresponding to the glasses apparatus to the glasses apparatus.

When the display mode is the 3D single view mode, a first region of the image frame may indicate a left-eye image of the 3D content, and a second region may indicate a right-eye image of the 3D content.

When the display mode is the 3D multi view mode, the image frame may include: a first image frame in which a first region indicates a left-eye image of a first 3D content and a second region indicates a black image; a second image frame in which the first region indicates a black image and the second region indicates a right-eye image of the first 3D content; a third image frame in which the first region indicates a left-eye image of a second 3D content and the second region indicate a black image; and a fourth image frame in which the first region indicates a black image and the second region indicates a right-eye image of the second 3D content, and the outputting may include outputting the first image frame, the second image frame, the third image frame, and the fourth image frame in sequence.

When the display mode is the 3D multi view mode, the transmitting the sync signal may include: transmitting transport timing information of a beacon packet to the glasses apparatus based on a message received from the glasses apparatus; and transmitting the beacon packet to the glasses apparatus according to the transport timing information.

According to an exemplary embodiment, there is provided a system comprising: at least one glasses apparatus; and a display apparatus, wherein at least one of the at least one glasses apparatus comprises: a first retarder configured to delay phases of a first image and a second image which are output from the display apparatus; a second retarder configured to delay the phases of the first image and the second image in a direction different from that of the first retarder; a first shutter glass and a second shutter glass configured to change polarization properties of the first image optical axis and the second image optical axis, which are rotated; and a controller configured to control to selectively supply the power to the first shutter glass and the second shutter glass so that a user selectively views the first image and the second image, and wherein the display apparatus comprises: a signal processor which configures an image frame according to a display mode; a display configured to output the image frame configured by the signal processor; a pattern retarder configured to polarize the output image frame differently in each region; a communicator configured to transmit at least one from among a sync signal and an audio signal to the at least one glasses apparatus, the at least one glasses apparatus configured to allow a user to view the image frame polarized differently in each region; and a controller configured to control to transmit at least one from among a sync signal and the audio signal to the at least one glasses apparatus according to the display mode.

The display mode may be one from among a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

According to yet another exemplary embodiment, there is provided a glasses apparatus comprising: a first retarder configured to delay phases of a first image and a second image which are output from a display apparatus; a second retarder configured to delay the phases of the first image and the second image in a direction different from that of the first retarder; a first shutter glass and a second shutter glass configured to change polarization properties of the first image optical axis and the second image optical axis; and a controller configured to control to selectively supply power to the first shutter glass and the second shutter glass so that a user selectively views the first image and the second image.

According to an aspect of the invention, there is provided a glasses apparatus as set out in claim 1. Preferred features are set out in claims 2 to 11.

According to an aspect of the invention, there is provided a system as set out in claim 12. Preferred features are set out in claim 13.

According to an aspect of the invention, there is provided a method as set out in claim 14.

According to an aspect of the invention, there is provided a display apparatus as set out in claim 15.

According to the exemplary embodiments described above, the user can view multi 2D, 3D, and multi 3D images with a single glasses apparatus and can also hear a sound of each content in a multi view display system.

The above and/or other aspects will be more apparent by describing in detail exemplary embodiments, with reference to the accompanying drawings, in which:
FIG. 1 is a view illustrating a display system according to an exemplary embodiment;
FIG. 2 is a block diagram illustrating a display apparatus according to an exemplary embodiment;
FIG. 3 is a view illustrating a screen of the display apparatus;
FIG. 4 is a block diagram illustrating a display apparatus according to another exemplary embodiment;
FIG. 5 is a block diagram illustrating a glasses apparatus according to an exemplary embodiment;
FIG. 6 is a view illustrating a configuration and operation of the glasses apparatus;
FIG. 7 is a view illustrating a display operation in a single 3D mode according to an exemplary embodiment;
FIG. 8 is a view illustrating a display operation in a multi 2D mode according to an exemplary embodiment;
FIG. 9 is a block diagram illustrating a signal processor according to an exemplary embodiment;
FIGS. 10 to 13 are views illustrating operations of the glasses apparatus when first to fourth image frames are displayed in a multi 3D mode according to an exemplary embodiment;
FIG. 14 is a view illustrating a driving voltage of a liquid crystal cell;
FIGS. 15 to 18 are views illustrating operations of the glasses apparatus when first to fourth image frames are displayed in a multi 2D mode according to another exemplary embodiment;
FIG. 19 is a view to explain an operation of a glasses apparatus when image data is alternately changed in odd/even lines of a pattern retarder;
FIG. 20 is a view to explain an operation of a glasses apparatus when image data is changed only in an odd line of the patter retarder;
FIG. 21 is a view to explain a method for transmitting a sync signal to a glasses apparatus using Bluetooth technology;
FIG. 22 is a view illustrating a an exterior of a glasses apparatus according to an exemplary embodiment;
FIG. 23 is a flowchart illustrating a display method according to various exemplary embodiments; and
FIG. 24 is a flowchart illustrating a method for operating a glasses apparatus according to various exemplary embodiments.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

### Display System

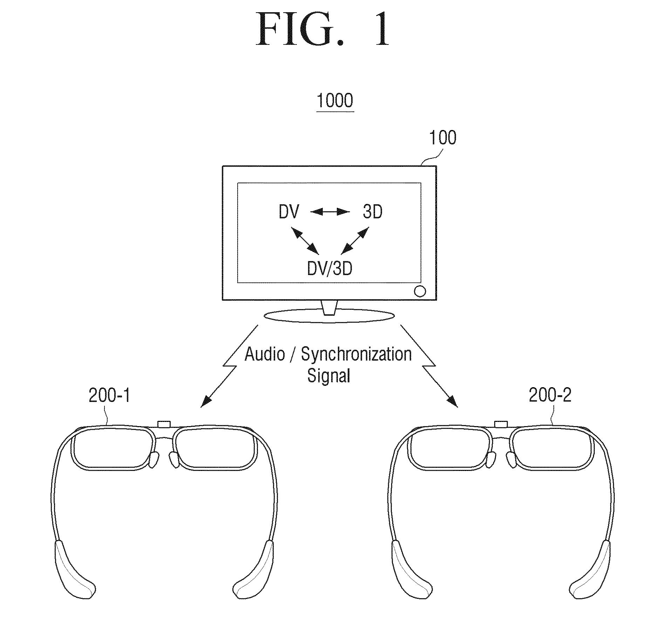

FIG. 1 is a view illustrating a display system according to an exemplary embodiment.

Referring to FIG. 1, a display system 1000 according to an exemplary embodiment includes a display apparatus 100 and one or more glasses apparatuses 200-1 and 200-2.

The display apparatus 100 displays a 2D content or a 3D content according to a display mode.

The content recited herein may include already created contents such as a video on demand (VoD) content, a premium VoD content, a broadcast content, an Internet content, a local file, and an external content linked with a Digital Living Network Alliance (DLNA) network. However, this should not be considered as limiting and the content may include a recorded broadcast content and a real-time broadcast content.

The 3D content refers to a content that enables a user to feel a sense of depth using a multi-view image which represents the same object from different viewpoints. On the other hand, the 2D content refers to a content that is comprised of image frames represented from a single viewpoint. The 3D content includes depth information indicating a degree of a sense of depth.

The display apparatus 100 may be operated in a 2D mode in which image frames of the 2D content are displayed on a display or a 3D mode in which image frames of the 3D content are displayed on a display.

The 2D mode may be one of a single 2D mode in which image frames of a single 2D content are output in sequence and a multi 2D mode in which image frames of a plurality of 2D contents are output.

Outputting the image frames in sequence means that the display apparatus displays image frames of a content in sequence at regular timer intervals. For example, if the 2D contents includes image frames A, B, C, D,...Z, the images frames A, B, C, D, ...Z are displayed at regular time intervals.

As shown in FIG. 1, the display apparatus 100 may switch among the multi 2D mode (DV), the 3D mode (3D), and the 3D multi mode (DV/3D). Although not shown in the drawing, the display apparatus 100 may be in the single 2D mode. At this time, the display apparatus may transmit at least one of a sync signal and an audio signal to the glasses apparatuses according to a display mode, as will be described below.

In this specification, the display apparatus 100 includes one or more displays and is configured to execute an application or display a content. For example, the display apparatus 100 may be implemented by using at least one of a digital TV, a tablet personal computer (PC), a portable multimedia player (PMP), a personal digital assistance (PDA), a smart phone, a mobile phone, a digital album, a digital signage, and a kiosk. Hereinafter, a digital TV will be explained by way of an example.

### Configuration and Operation of Display Apparatus

First, the configuration and the operation of the display apparatus 100 will be explained.

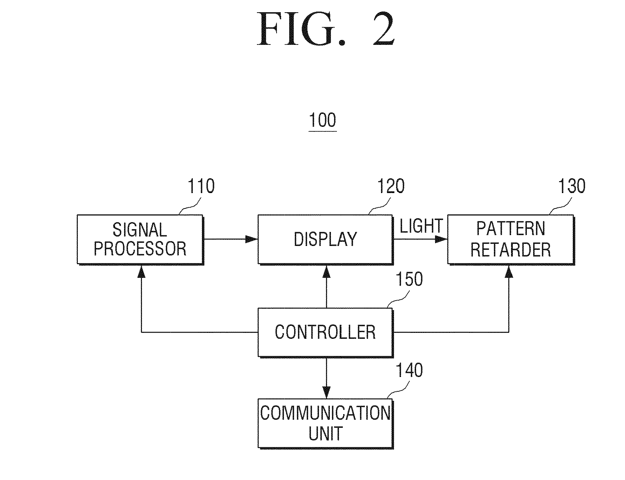

FIG. 2 is a block diagram illustrating a display apparatus 100 according to an exemplary embodiment.

Referring to FIG. 2, the display apparatus 100 according to an exemplary embodiment includes a signal processor 110, a display 120, a pattern retarder 130, a controller 150, and a communication unit 140.

The signal processor 110 configures image frames of a 2D content or a 3D content and also performs various signal-processing operations with respect to the 2D content or the 3D content. Specifically, the signal processor 110 extracts audio data and video data from an image content, performs signal-processing with respect to the audio data and the video data, and forms an image frame and an audio signal.

The display 120 outputs the image frame which is formed by the signal processor 110. Although not shown in the drawing, the image frame output from the signal processor 110 is multiplexed through a multiplexer (not shown), and the display 120 arranges the image frames of each content differently according to a set display mode and outputs the image frames.

In the multi 2D mode, the display 120 displays different contents on different regions of a screen. For example, the display 120 may output an image of a first content through an odd numbered horizontal line of the screen and outputs an image of a second content through an even-numbered horizontal line. On the other hand, the display 120 may display the image of the second content through an odd-numbered vertical line and may display the image of the first content through an even-numbered vertical line. As will be described later, the pattern retarder 130 changes a property of polarized light differently in each region of the screen, so that users view images of different contents through different glasses apparatuses.

In the 3D mode, the display 120 may display a left-eye image and a right-eye image in each region of the screen. For example, the display 120 may output a left-eye image of a content through an odd-numbered horizontal line of the screen and may output a right-eye image of the content through an even-numbered horizontal line. On the other hand, the display 120 may display the right-eye image of the content through an odd-numbered vertical line and may display the left-eye image of the content through an even-numbered vertical line. As will be described later, the pattern retarder 130 changes a property of polarized light differently in each region of the screen, so that the left-eye image and the right-eye image pass through the left-eye lens and the right-eye lens of the glasses apparatus, respectively.

The pattern retarder 130 polarizes the output image frames differently in each region. Although not shown, the display apparatus 100 may include a polarizing member to linearly polarize a displayed image in a specific direction. The linearly polarized light is double refracted when being passed through the pattern retarder 130, causing a phase difference, and thus is transformed into a circularly polarized light. Although the display apparatus 100 initially polarizes the image in a horizontal direction and outputs the image in this exemplary embodiment, this should not be considered as limiting and the display apparatus 100 may polarize the image in a different direction.

The pattern retarder 130 may be bonded to a display panel (not shown) of the display apparatus 100. In this exemplary embodiment, the pattern retarder 130 includes first patterns which are opposite odd-numbered lines of a pixel array of the display panel (not shown), and second patterns which are opposite even-numbered lines of the pixel array of the display panel (not shown). In this case, an optical axis of the first patterns is different from an optical axis of the second patterns as described above. For example, the first patterns and the second patterns may delay a phase of incident light as much as -1/4 wavelength and 1/4 wavelength, respectively. In this case, the linearly polarized light may be transformed into the circularly polarized light of different directions. That is, the first patterns of the pattern retarder 130 may convert light of the image displayed on the odd-numbered line of the pixel array into left circularly polarized light and the second patterns of the pattern retarder 130 may convert light of the image displayed on the even-numbered line of the pixel array into right circularly polarized light.

At this time, one glasses apparatus includes a retarder film to display the phase of the incident light as much as 1/4 wavelength or -1/4 wavelength, a liquid crystal cell to delay the phase of the incident light as much as 1/2 wavelength or -1/2 wavelength, and a polarizing plate. The glasses apparatus passes only the image of the odd-numbered line or the image of the even-numbered line through the above-described elements. This will be explained in detail below.

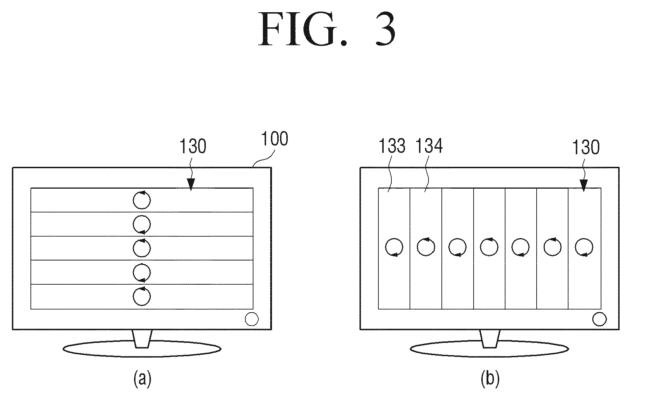

FIG. 3 is a view illustrating the screen of the display apparatus 100.

As shown in view (a) of FIG. 3 and described above, the pattern retarder 130 may delay the phase differently in each horizontal pixel line. However, each pattern region of the pattern retarder 130 is not necessarily divided into horizontal lines. That is, as shown in view (b) of FIG. 3, the pattern retarder 130 may include third patterns 133 which are opposite odd-numbered vertical lines and fourth patterns 134 which are opposite even-numbered vertical lines.

The communication unit 140 communicates with glasses apparatus 200 through which the user views the polarized image frames. Firstly, the communication unit 140 receives a user command. The user command includes various commands to control the display apparatus 100 and includes a command to change a display mode of the display apparatus 100. The user command may be generated in a remote controller or the glasses apparatus 200, and may be transmitted. Secondly, the communication unit 140 performs pairing with the glasses apparatus 200 and performs synchronization with the glasses apparatus 200 by transmitting a transport stream including a sync signal to the glasses apparatus 200. Thirdly, the communication unit 140 transmits an audio signal to the glasses apparatus 200.

Hereinafter, a user command to change a display mode will be explained.

The display mode recited herein is one of a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

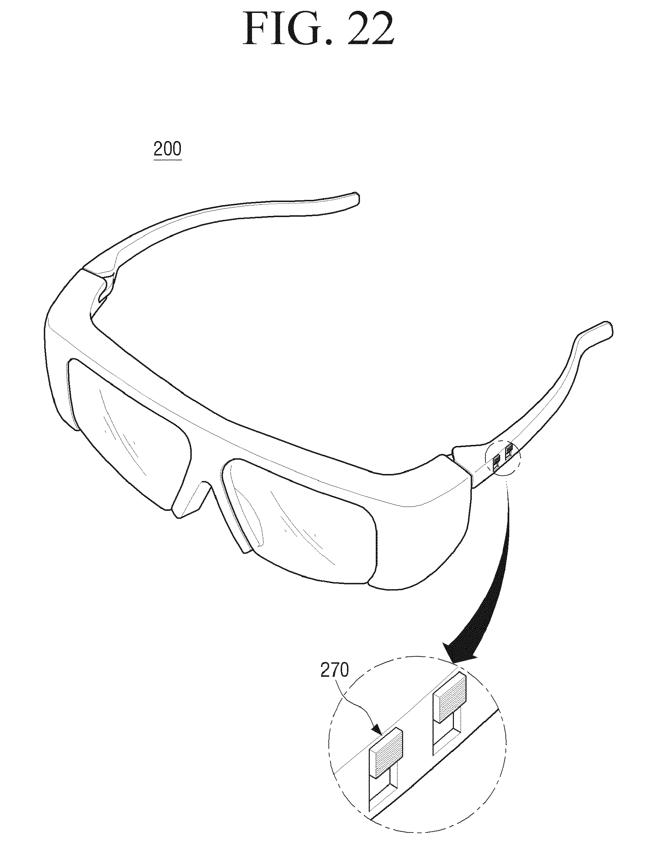

The user may set a display mode using a mode change button of the remote controller (not shown) or an input unit (see FIG. 22) of the glasses apparatus 200. The latter case will be explained when the glasses apparatus 200 is described. Herein, mode change input through the remote controller will be explained.

When the user presses the mode change button (not shown) of the remote controller (not shown), a display mode change command is generated and transmitted to the display apparatus through a communicating means (not shown). The controller 150 of the display apparatus 100 identifies a display mode according to the received mode change command. The controller 150 changes a current display mode according to the received display mode when the current display mode is different from the display mode of the received mode change command. That is, the controller 150 controls the signal processor 110 to configure image frames according to the changed display mode. When the changed display mode is the multi 2D mode or the multi 3D mode, the signal processor 110 generates at least one of the sync signal and the audio signal and transmits the at least one of the sync signal and the audio signal to the glasses apparatus 200 through the communication unit 140.

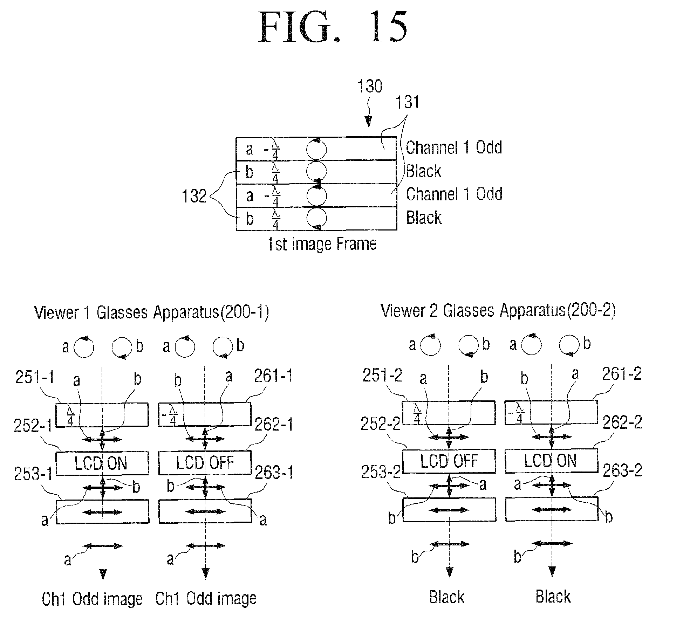

According to an exemplary embodiment, the communication unit 140 may be implemented by using a Bluetooth communication module. Accordingly, the communication unit 140 may generate a transport stream to include at least one of the sync signal and the audio signal according to the Bluetooth communication standard, and may transmit the transport stream to the glasses apparatus 200. When the display mode is the multi 2D mode or the multi 3D mode, the communication unit 140 may transmit an audio signal corresponding to each content to the glasses apparatus 200 under the control of the controller 150. Since the operation of the glasses apparatus 200 is changed due to change of a frame rate in the multi 3D mode, the communication unit 140 transmits the sync signal. In exemplary embodiments which will be described below with reference to FIGS. 15 to 18, since the operation of the glasses apparatus 200 is changed in the multi 2D mode, the communication unit 140 should transmit the sync signal to the glasses apparatus 200.

The controller 150 controls an overall operation of the display apparatus 100. Specifically, the controller 150 controls the signal processor 110, the multiplexer (not shown), the display 120, and the communication unit 140 to perform their respective operations. In particular, the controller 150 transmits at least one of the sync signal and the audio signal to the glasses apparatus according to a display mode. Specifically, when the display mode is the multi 2D mode or the multi 3D mode, the controller 150 may transmit at least one of the sync signal and the audio signal of each content to the glasses apparatus 200. On the other hand, in the 3D single mode in which the frame rate is not changed and a left-eye shutter glass and a right-eye shutter glass of the glasses apparatus 200 are fixed, it is not necessary to transmit the sync signal or the audio signal separately.

The controller 150 may be a micro processor, an integrated circuit (IC) chip, a central processing unit (CPU), or a micro processor unit (MPU) from a hardware perspective, and may include an operating system (OS) and an application from a software perspective. A control command to operate the display apparatus 100 is read out from a memory according to a system clock, and an electric signal is generated according to the read out control command and operates each element of hardware.

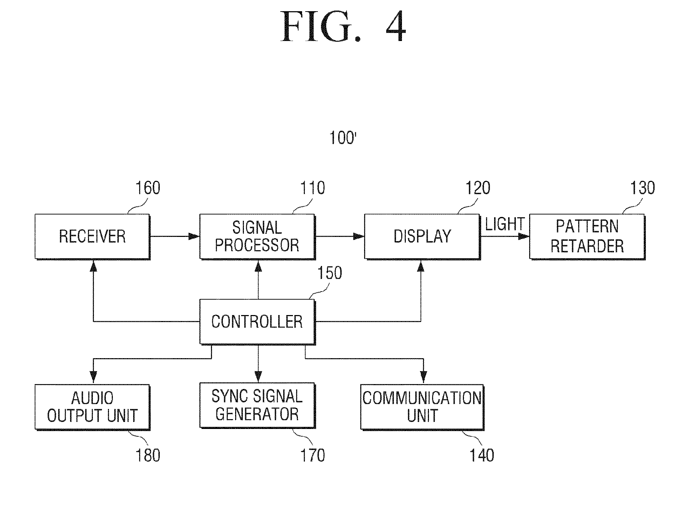

FIG. 4 is a block diagram illustrating a display apparatus 100' according to another exemplary embodiment.

Referring to FIG. 4, the display apparatus 100' according to another exemplary embodiment further includes a receiver 160, an audio output unit 180, and a sync signal generator 170 in addition to the above-described elements.

A plurality of receivers 160 may be provided. In particular, in a multi view mode (multi 2D mode or multi 3D mode) or 3D mode, different contents or a left-eye image and a right-eye image may be received from different sources. In this case, the plurality of receivers 160 receive data from the different sources.

The receiver 160 may receive a content (e.g. a content item) from a broadcasting station which transmits a broadcast program content using a broadcast network, or from a web server which transmits a content file through the Internet. Also, the receiver 160 may receive contents from various recording medium reproducing apparatuses which are provided in the display apparatus 100' or connected to the display apparatus 100'. The recording medium reproducing apparatus recited herein is an apparatus that reproduces a content recorded on various kinds of recording media such as a compact disk (CD), a digital versatile disk (DVD), a hard disk, a blue-ray disk, a memory card, and a universal serial bus (USB) memory card.

According to an exemplary embodiment in which a content is received from a broadcasting station, the receiver 160 may include a tuner (not shown), a demodulator (not shown), and an equalizer (not shown). On the other hand, according to an exemplary embodiment in which a content is received from a source such as a web server, the receiver 160 may be implemented by using a network interface card (not shown). Also, according to an exemplary embodiment in which a content is received from the above-described various recording medium reproducing apparatuses, the receiver 160 may be implemented by using an interface (not shown) connected to the recording medium reproducing apparatus. For example, the receiver 160 may be implemented by using an audio/video (AV) terminal, a COMP terminal, or a high definition multimedia interface (HDMI) terminal. Besides these, the receiver 160 may be implemented in various forms according to exemplary embodiments. If a plurality of receivers 160 are provided, the receivers may receive contents from different types of sources and may establish a hybrid system.

The sync signal generator 170 generates a sync signal to synchronize the glasses apparatus 200 corresponding to each content according to a display timing of each content. In the single 2D mode or single 3D mode, it is not necessary to synchronize the glasses apparatus 200 and thus a separate sync signal is not required.

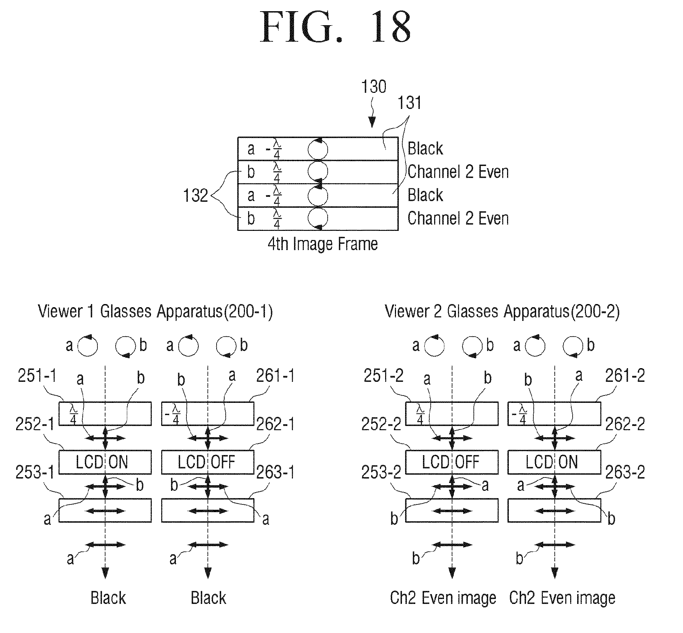

On the other hand, in the multi 3D mode, a frame rate is changed. Therefore, the display apparatus 100' should generate a sync signal and transmit it to each glasses apparatus 200. The operations of the display apparatus 100' and the glasses apparatus 200 will be explained below in detail. In the multi 2D mode, it is necessary to change a frame rate in order to include a black image as in exemplary embodiments of FIGS. 18 to 21 and thus a sync signal should be generated.

Hereinafter, a hardware configuration of the display 120 will be explained.

The display 120 is configured to output a signal-processed image frame. The display 120 may include a timing controller (not shown), a gate driver (not shown), a data driver (not shown), a voltage driver (not shown), a display panel (not shown), and a polarizing plate (not shown).

The timing controller (not shown) receives a clock signal (DCLK), a horizontal sync signal (Hsync), and a vertical sync signal (Vsync), which are suitable for resolution of the display apparatus 100, from an external source, and generates a gate control signal (scan control signal) and a data control signal (data signal). The timing controller (not shown) re-arranges received R, G, and B data and transmits the R, G, and B data to the data driver.

The timing controller (not shown) may generate a gate shift clock (GSC), a gate output enable (GOE), and a gate start pulse (GSP) in connection with the gate control signal. Herein, the GSC is a signal for determining a time at which a thin film transistor (TFT) connected to a light emitting element such as R, G, and B organic light emitting diodes (OLEDs) is turned on/off, the GOE is a signal for controlling output of the gate driver, and the GSP is a signal for indicating a first driving line of a screen in one vertical sync signal. Also, the timing controller (not shown) may generate a source sampling clock (SSC), a source output enable (SOE), and a source start pulse (SSP) in connection with the data control signal.

The gate driver (not shown) is configured to generate a scan signal, and is connected to the display panel through scan lines (S₁, S₂, S₃, ..., Sn). The gate driver applies gate on/off voltages (Vgh/Vgl) received from the voltage driver to the display panel according to the gate control signal generated by the timing controller. The gate on voltage (Vgh) is provided to gate line 1 (GL1) to gate line N(GLn) in sequence in order to implement a unit frame image on the display panel. The data driver (not shown) is configured to generate a data signal and is connected to the display panel (not shown) through data lines D₁, D₂, D₃, ..., Dm). The data driver (not shown) inputs RGB data of a 3D left-eye image frame and a right-eye image frame of 3D image data that has been scaled to the display panel (not shown) according to the data control signal generated by the timing controller (not shown). The data driver (not shown) converts RGB image data which is provided in series by the timing controller (not shown) into parallel data, converts digital data into analogue voltage, and provides image data corresponding to a single horizontal line to the display panel (not shown). This process is performed in each horizontal line in sequence.

The voltage driver (not shown) generates driving voltages and transmits the driving voltages to the display panel (not shown), the gate driver (not shown), and the data driver (not shown). That is, the voltage driver may receive supply voltage from an external source, that is, receive alternating current (AC) voltage of 110V or 220V, generate power voltage (VDD) necessary for the display panel, and provide the power voltage (VDD) or provide grounded voltage (VSS). Also, the voltage driver may generate gate on voltage (Vgh) and provide the gate on voltage to the gate driver (not shown). To achieve this, the voltage driver (not shown) may include a plurality of voltage driving modules (not shown) which are operated individually. The plurality of voltage driving modules (not shown) may be operated to provide different voltages under the control of the controller 150, and the controller 150 may control the voltage driver (not shown) such that the plurality of voltage driving modules provide different driving voltages according to predetermined information.

The display panel (not shown) may include a plurality of gate lines (GL1∼GLn) and a plurality of data lines (DL1∼DLn) which intersect to define pixel regions, and light emitting elements of R, G, and B such as OLEDs may be formed in the pixel regions. A switching elements, that is, a TFT may be formed on a certain region of the pixel region (not shown), more specifically, on a corner. When the TFT is turned on, gray scale voltage is provided to each of the R, G, and B light emitting elements from the data driver. At this time, the R, G, and B light emitting elements provide light according to an amount of current provided based on the gray scale voltage. That is, as the R, G, and B light emitting elements provide more current, more light is provided.

The display panel (not shown) may be implemented by using an active matrix organic light-emitting diode (AM-OLED) panel. However, this is merely an example and the display panel may be implemented by using a passive matrix organic light-emitting diode (PM-OLED) panel which is driven by making a single line emit light simultaneously.

The polarizing plate is provided on a surface of a screen of the display apparatus and polarizes an image output from the display apparatus in a predetermined direction. The image passing through the polarizing plate mainly forms linear polarization. However, when the display apparatus provides multi-view displaying a plurality of contents or displays a 3D content including a left-eye image and a right-eye image according to the above-described exemplary embodiments, the display apparatus may output an image which is polarized in a plurality of directions if necessary. In this case, the displaying apparatus can comprise the polarizing plate which may include a polarizer having a varying optical axis, or may include a polarizer having an optical axis varying according to a pattern region of the pattern retarder.

The above-described display 120 may be implemented by using various displays such as a liquid crystal display (LCD), a plasma display panel (PDP), an OLED, a vacuum fluorescent display (VFD), a field emission display (FED), or an electro luminescence display (ELD).

The audio output unit 180 is configured to output a sound of a content to the outside. The audio output unit 180 may include an audio decoder (not shown), a modulator (not shown), and at least one speaker (not shown). The display apparatus separates video data and audio data from a content which is received by the receiver 160 through a demultiplexer (not shown). The audio decoder (not shown) decodes the separated audio data and the modulator (not shown) modulates the decoded audio data into signals of different frequencies. The speaker (not shown) outputs the modulated audio data. One or more speakers (not shown) may be disposed on an appropriate location or locations of a housing of the display apparatus 100'. Since a sound may be different from content in the multi view mode (multi 2D mode or multi 3D mode), when the display apparatus 100' enters such a mode, the audio output unit 180 does not emit a sound and transmits an audio signal of each content to the glasses apparatus 200 through the communication unit 140.

### Configuration and Operation of Glasses Apparatus

Hereinafter, the configuration and operation of the glasses apparatus 200 will be explained.

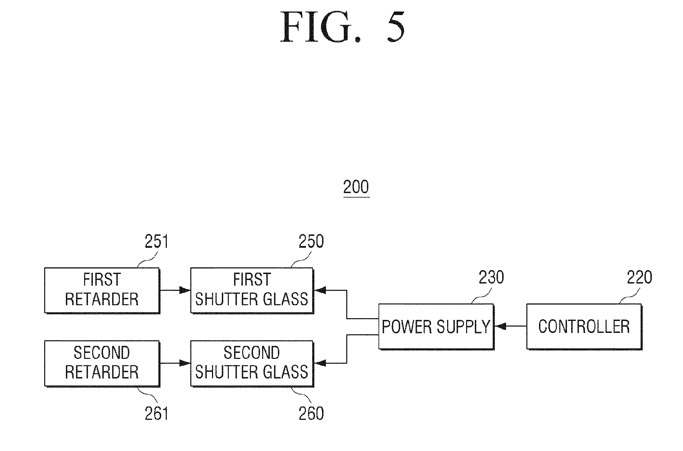

FIG. 5 is a block diagram illustrating the glasses apparatus 200 according to an exemplary embodiment.

Referring to FIG. 5, the glasses apparatus 200 according to an exemplary embodiment includes a first retarder 251, a second retarder 261, a first shutter glass 250, a second shutter glass 260, a power supply 230, and a controller 220. Although not shown in the drawing, the glasses apparatus 200 may further include a communication unit (not shown).

The communication unit (not shown) communicates with the display apparatus 100 which in this embodiment polarizes an image frame differently in each region through the pattern retarder 130 and outputs the image frame. Specifically, in this embodiment, the communication unit (not shown) communicates with the display apparatus 100 and receives at least one of a sync signal and an audio signal.

For example, when the display mode is the multi 3D mode and the communication unit (not shown) is implemented by using a Bluetooth communication module, the communication unit (not shown) may communicate with the display apparatus 100 according to the Bluetooth communication standard and may receive a transport stream including a sync signal. In this case, the transport stream includes time information for turning on or off the first shutter glass 250 and the second shutter glass 260 of the glasses apparatus 200 in synchronization with a display timing of the image frame of each content, and the glasses apparatus 200 may turn on or off the shutter glasses according to the display timing of the image frame of the content.

On the other hand, the communication unit (not shown) may be implemented by using an infrared ray (IR) receiving module and may receive a sync signal of an IR form having a specific frequency. In this case, the sync signal includes time information for turning on or off the first shutter glass 250 and the second shutter glass 260 of the glasses apparatus 200 to be synchronized with the display timing of the image frame of the content.

The communication unit (not shown) may receive an image frame rate regarding each content and information on an image frame period from the display apparatus 100.

The controller 220 controls an overall operation of the glasses apparatus 200. The controller 220 transmits the sync signal which is received through the communication unit (not shown) to the power supply 230 and controls an operation of the power supply 230. That is, the controller 220 controls to generate a driving signal for driving the first shutter glass 250 and the second shutter glass 260 based on the sync signal.

The first retarder 251 is configured to double refract the image which has been polarized by the display apparatus 100. The first retarder 251 includes a fast axis and a slow axis. The double refracted image corresponds to the fast axis and the slow axis and is transformed into a polarization component having a constant phase difference. For example, the first retarder 251 may transform linearly polarized light into circularly polarized light or elliptically polarized light by double refracting the image which has been polarized and output by the display apparatus 100, and on the contrary, may change a direction of circularly polarized light or may transform circularly polarized light into linearly polarized light. The first retarder 251 may be a retarder film of a 1/4 wavelength plate (quarter-wave film) or a retarder film of a 1/2 wavelength plate.

The 1/4 wavelength retarder film transforms linearly polarized light into circularly polarized light. When two 1/4 wavelength retarder films are continuously provided or a 1/2 wavelength retarder film is provided, the retarder film rotates an optical axis of linearly polarized light by 90°. On the other hand, when the two 1/4 wavelength retarder films have different wavelength delay directions, the circularly polarized film transformed from the linearly polarized film is restored to linearly polarized light. Using such a characteristic of the first retarder 251, only the selectively polarized image is allowed to pass such that the user can view multi-view or a 3D image.

The second retarder 261 performs the same function as that of the first retarder 251. The first retarder 251 and the second retarder 261 of the present disclosure rotate optical axes of a first image and a second image output from the display apparatus 100 in different directions. According to an exemplary embodiment, the second retarder 261 delays a phase in a direction opposite to that of the first retarder 251. That is, the first retarder 251 may be a -1/4 wavelength retarder film and the second retarder 261 may be a 1/4 wavelength retarder film, or vice versa.

The first shutter glass 250 and the second shutter glass 260 change polarization properties of the first image and the second image the optical axes of which are rotated according to whether power is supplied or not. At this time, the controller 220 controls to selectively supply power to the first shutter glass and the second shutter glass such that the user views the first image and the second image selectively.

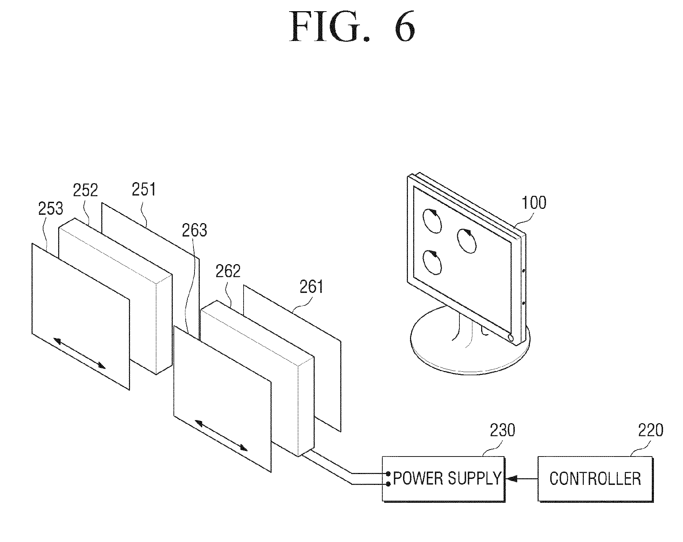

FIG. 6 is a view illustrating the configuration and operation of the glasses apparatus.

As described above, the glasses apparatus 200 includes the first retarder 251, the second retarder 261, the first shutter glass 250, the second shutter glass 260, the power supply 230, and the controller 220.

As shown in FIG. 6, the first shutter glass 250 includes a liquid crystal cell 252 and a rear surface polarizer 253, and the second shutter glass 260 includes a liquid crystal cell 262 and a rear surface polarizer 263.

The liquid crystal cell 252 is configured to have its orientation switched according to a driving voltage, and change a polarization property according to the switched orientation. The polarization property may be a phase or a direction of polarized light. That is, when a polarized image enters and the liquid crystal cell 252 is oriented by a driving voltage applied thereto, the liquid crystal cell 252 delays a wavelength of incident light or allows the incident light to pass therethrough as it is. For example, the liquid crystal cell 252 may be an active retarder, and may change a polarization direction of a linearly polarized image (phase change) or may change a direction of circularly polarized light to an opposite direction by changing a phase of the circularly polarized light when specific voltage is applied or not applied. According to an exemplary embodiment, when no voltage is applied, the liquid crystal cell 252 may rotate an optical axis of linearly polarized light by 90° (may change a phase difference as much as λ/2), and, when voltage is applied, may allow incident light to pass therethrough without changing it. That is, when no voltage is applied and incident light is linearly polarized, the liquid crystal cell 252 may rotate a polarization direction by 90°. The liquid crystal cell 252 may transform left circularly polarized light into right circularly polarized light or may transform right circularly polarized light into left circularly polarized light.

The liquid crystal cell 252 is not limited to the above-described technology and may be a TN electrically controllable birefringence (ECB) cell or a TN optically compensated bend (OCB) cell.

The rear surface polarizer 253 is configured to further polarize the image passing through the liquid crystal cell 252, and blocks a component which is perpendicular to the polarization axis. The rear surface polarizer 253 may allow only a polarization component that is perpendicular or parallel to the polarized light output from the display apparatus 100 to pass therethrough according to a purpose.

The liquid crystal cell 262 of the second shutter glass 260 is operated in the same way as that of the liquid crystal cell 252. In the above exemplary embodiment, the liquid crystal cell 252 and the liquid crystal cell 262 rotate the optical axis by 90° when no voltage is applied, and allow the image to pass therethrough as it is when voltage is applied. However, the liquid crystal cells 252 and 262 may be operated in the opposite way according to an exemplary embodiment. Hence, in some embodiments, the liquid crystal cells 252 and 262 may operate in the same or different ways.

The rear surface polarizer 263 of the second shutter glass 260 is operated in the same way as that of the rear surface polarizer 253 in this embodiment. However, a polarization axis may be set differently according to an exemplary embodiment. In this case, the retarder and the liquid crystal cell should be adjusted appropriately according to a purpose. For example, one rear surface polarizer may have a horizontal polarization axis and the other rear surface polarizer may have a vertical polarization axis. In this case, unlike in the above-described exemplary embodiment, opposite voltage should be applied to the liquid crystal cell of one of the two rear surface polarizers.

Briefly, as shown in FIG. 6, the display apparatus 100 double refracts the polarized image through the patter retarder 130 and outputs the image. The output image passes through the first retarder 251 and the second retarder 261 of the glasses apparatus 200. The controller 220 generates a control signal and operates the power supply 230. The power supply 230 selectively applies voltage to the liquid crystal cells 252 and 262 and selectively changes the orientations of the liquid crystal cells 252 and 262, thereby transforming the polarization property of the image passing through the retarders 251 and 261. Finally, when the image passing through the liquid crystal cells 252 and 262 passes through the rear surface polarizers 253 and 263, only the image that is polarized in a fixed direction enters the user's eyes.

On the other hand, the above-described glasses apparatus 200 may further include an audio output unit to output a received audio signal.

In a related-art multi view system, there is a problem that a plurality of users viewing different contents have no choice but to hear the same sound output from the display apparatus if there is no separate audio receiving and outputting means. However, in a multi view system of the present disclosure, a sound of each content is transmitted to the glasses apparatus 200 such that the user can hear the sound of each content through the audio output unit (not shown) of the glasses apparatus 200. To achieve this, the audio output unit (not shown) of the glasses apparatus 200 may include an earphone (not shown).

Hereinafter, the operations of the display apparatus 100 and the glasses apparatus 200 according to each display mode will be explained.

### Operation in single 3D mode

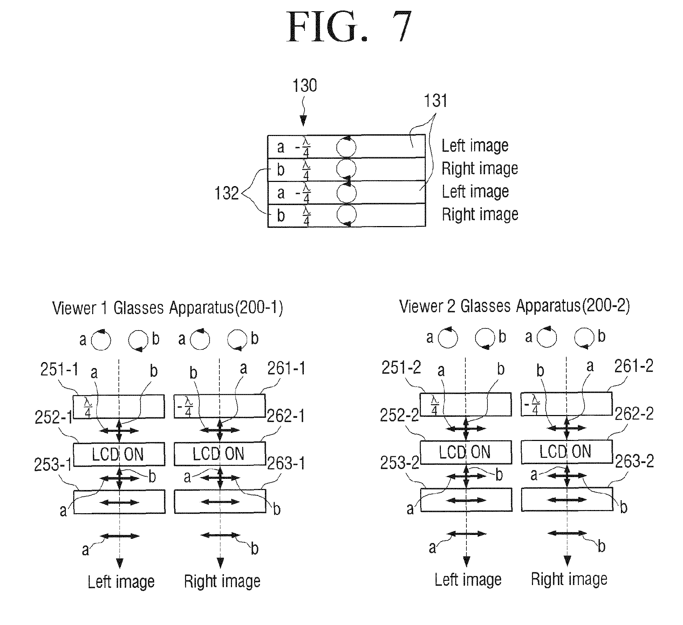

FIG. 7 is a view illustrating a display operation in a single 3D mode according to an exemplary embodiment.

Referring to FIG. 7, a left-eye image (a) which is left circularly polarized is output through a first region 131 of the pattern retarder 130 of the display apparatus 100, and a right-eye image (b) which is right circularly polarized is output through second region 132. It is assumed that the left-eye image (a) and the right-eye image (b) are formed of linearly polarized light having the same horizontal optical axis at the beginning. It is also assumed that the liquid crystal cell rotates the optical axis by 90° (delays the phase as much as 1/2 wavelength) when voltage is off, and allows the image to pass therethrough as it is when voltage is on. Of course, the liquid crystal cell may be operated in the opposite way according to an exemplary embodiment. Also, it is assumed that rear surface polarizers 253-1 and 263-1 block light having a polarization component of a vertical direction. The rear surface polarizers may also be operated in the opposite way according to an exemplary embodiment.

At this time, a retarder 251-1 of a left-eye shutter glass of a glasses apparatus 200-1 of a first viewer has a phase delay property in a direction opposite to that of the first region 131 of the pattern retarder 130. That is, the retarder 251-1 generates a 1/4 wavelength phase difference in the opposite direction with respect to the same linearly polarized image. The left-eye image (a) passing through the retarder 251-1 of the left-eye shutter glass is restored to the linearly polarized light of the horizontal direction. On the other hand, since the retarder 251-1 of the left-eye shutter glass generates a 1/4 wavelength phase difference in the same direction as that of the second region 132 of the pattern retarder 130, the right-eye image (b) passing through the retarder 251-1 of the left-eye shutter glass is further delayed as much as 1/4 wavelength and the optical axis is rotated by 90° such that the right-eye image (b) is transformed into linearly polarized light of the vertical direction.

Since a liquid crystal cell 252-1 of the left-eye shutter glass of the glasses apparatus 200-1 of the first viewer is turned on, the liquid crystal cell 252-1 allows the horizontally polarized left-eye image (a) and the vertically polarized right-eye image (b) to pass therethrough as they are. Since a rear surface polarizer 253-1 blocks only the light that has a vertical polarization component, only the left-eye image (a) finally reaches the left eye.

On the other hand, a retarder 261-1 of a right-eye shutter glass of the glasses apparatus 200-1 of the first viewer has a phase delay property in a direction opposite to that of the second region 132 of the pattern retarder 130. That is, the retarder 261-1 generates a 1/4 wavelength phase difference in the opposite direction with respect to the same linearly polarized image. The right-eye image (b) passing through the retarder 261-1 of the right-eye shutter glass is restored to the linearly polarized light of the horizontal direction. On the other hand, since the retarder 261-1 of the right-eye shutter glass generates a 1/4 wavelength phase difference in the same direction as that of the first region 131 of the pattern retarder 130, the left-eye image (a) passing through the retarder 261-1 of the right-eye shutter glass is further delayed as much as 1/4 wavelength and the optical axis is rotated by 90° such that the left-eye image (a) is transformed into linearly polarized light of the vertical direction.

Since a liquid crystal cell 262-1 of the right-eye shutter glass of the glasses apparatus 200-1 of the first viewer is turned on, the liquid crystal cell 262-1 allows the horizontally polarized right-eye image (b) and the vertically polarized left-eye image (a) to pass therethrough as they are. Since a rear surface polarizer 263-1 blocks only the light that has a vertical polarization component, only the right-eye image (b) finally reaches the right eye.

Accordingly, the first viewer wearing the glasses apparatus 200-1 views only the left-eye image (a) through his/her left eye and views only the right-eye image (b) through his/her right eye.

A glasses apparatus 200-2 of a second viewer is operated in the same way as that of the glasses apparatus 200-1 of the first viewer. The second viewer wearing the glasses apparatus 200-2 views only the left-eye image (a) through his/her left eye and views only the right-eye image (b) through his/her right eye.

Also, the user may view the 3D image through a passive glasses apparatus in a similar method.

Although not shown, when a left circularly polarized left-eye image is output through the first region 131 of the pattern retarder 130 of the display apparatus 100, and a right circularly polarized right-eye image is output through the second region 132, similarly to the case of FIG. 7, it is assumed that the left-eye image and the right-eye image are formed of linearly polarized light having the same horizontal optical axis at the beginning. The passive glasses apparatus (not shown) does not include a liquid crystal cell.

Explaining the operation of the passive glasses apparatus of the first viewer, a retarder of a left-eye lens has a phase delay property of a direction opposite to that of the first region 131 of the pattern retarder 130. That is, the retarder generates a 1/4 wavelength phase difference in the opposite direction with respect to the same linearly polarized image. The left-eye image passing through the retarder of the left-eye lens is restored to the linearly polarized light. On the other hand, since the retarder of the left-eye shutter lens generates a 1/4 wavelength phase difference in the same direction as that of the second region 132 of the pattern retarder 130, the right-eye image passing through the retarder of the left-eye shutter lens is further delayed as much as 1/4 wavelength and the optical axis is rotated by 90° such that the right-eye image is transformed into the linearly polarized light of the vertical direction.

Since a rear surface polarizer of the passive glasses apparatus of the first viewer blocks light that has a polarization component of a vertical direction, only the left-eye image finally reaches the left eye.

On the other hand, a retarder of a right-eye lens of the passive glasses apparatus of the first viewer has a phase delay property of a direction opposite to that of the second region 132 of the pattern retarder 130. That is, the retarder generates a 1/4 wavelength phase difference in the opposite direction with respect to the same linearly polarized image. Accordingly, the right-eye image passing through the retarder of the right-eye lens is restored to the linearly polarized light. On the other hand, since the retarder of the right-eye shutter lens generates a 1/4 wavelength phase difference in the same direction as that of the first region 131 of the pattern retarder 130, the left-eye image passing through the retarder of the right-eye shutter lens is further delayed as much as 1/4 wavelength and the optical axis is rotated by 90° such that the left-eye image is transformed into the linearly polarized light of the vertical direction.

Since the rear surface polarizer blocks light that has a polarization component of a vertical direction, only the right-eye image finally reaches the right eye.

Accordingly, the first viewer wearing the passive glasses apparatus views only the left-eye image through his/her left eye and views only the right-eye image through his/her right eye.

A passive glasses apparatus (not shown) of the second viewer is operated in the same way as that of the passive glasses apparatus of the first viewer. The second viewer wearing the passive glasses apparatus views only the left-eye image through his/her left eye and views only the right-eye image through his/her right eye.

### Operation in Multi 2D Mode

Hereinafter, a display operation in a multi 2D mode will be explained.

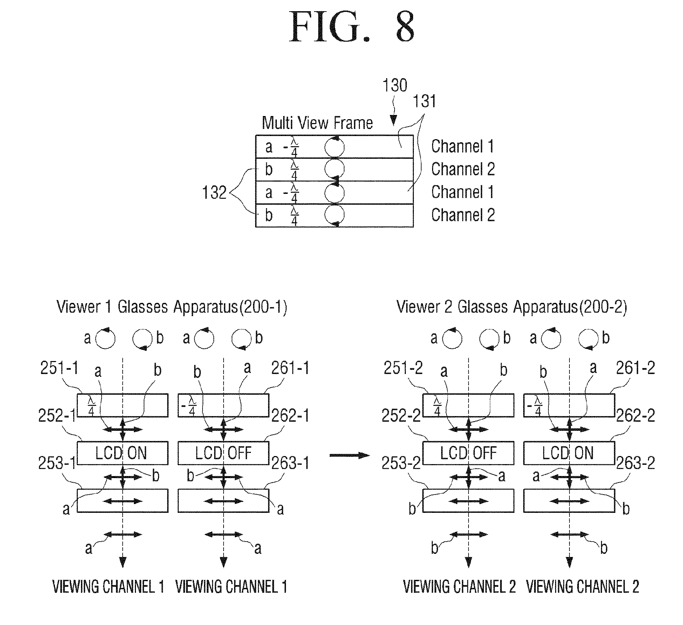

FIG. 8 is a view illustrating a display operation in a multi 2D mode according to an exemplary embodiment.

Referring to FIG. 8, a left circularly polarized channel 1 image (a) is output through the first region 131 of the pattern retarder 130 of the display apparatus 100, and a right circularly polarized channel 2 image (b) is output through the second region 132. It is assumed that the channel 1 image (a) and the channel 2 image (b) are formed of linearly polarized light having the same horizontal optical axis at the beginning. Also, it is assumed that the liquid crystal cell rotates the optical axis when voltage is off and allows the image to pass therethrough as it is when voltage is on. Of course, the liquid crystal cell may be operated in the opposite way according to an exemplary embodiment. Also, it is assumed that the rear surface polarizers 253-1 and 263-1 blocks light that has polarization component of a vertical direction. The rear surface polarizers may be operated in the opposite way according to an exemplary embodiment.

At this time, the retarder 251-1 of the left-eye shutter glass of the glasses apparatus 200-1 of the first viewer has a phase delay property of a direction opposite to that of the first region 131 of the pattern retarder 130. That is, the retarder 251-1 generates a 1/4 wavelength phase difference in the opposite direction with respect to the same linearly polarized image. The channel 1 image (a) passing through the retarder 251-1 of the left-eye shutter glass is restored to the linearly polarized light. On the other hand, since the retarder 251-1 of the left-eye shutter glass generates a 1/4 wavelength phase difference in the same direction as that of the second region 132 of the pattern retarder 130, the channel 2 image (b) passing through the retarder 251-1 of the left-eye shutter glass is further delayed as much as 1/4 wavelength and the optical axis is rotated by 90° such that the channel 2 image (b) is transformed into the linearly polarized light of the vertical direction.

Since the liquid crystal cell 252-1 of the left-eye shutter glass of the glasses apparatus 200-1 of the first viewer is on, it allows the horizontally polarized channel 1 image (a) and the vertically polarized channel 2 image (b) to pass therethrough as they are. Also, since the rear surface polarizer 253-1 b blocks light that has a polarization component of a vertical direction, only the channel 1 image (a) finally reaches the left eye.

Likewise, the retarder 261-1 of the right-eye shutter glass of the glasses apparatus 200-1 of the first viewer has a phase delay property of a direction opposite to that of the second region 132 of the pattern retarder 130. That is, the retarder 261-1 generates a 1/4 wavelength phase difference in the opposite direction with respect to the same linearly polarized image. Accordingly, the channel 2 image (b) passing through the retarder 261-1 of the right-eye shutter glass is restored to the linearly polarized light of the horizontal direction. On the other hand, since the retarder 261-1 of the right-eye shutter glass generates a 1/4 wavelength phase difference in the same direction as that of the first region 131 of the pattern retarder 130, the channel 1 image (a) passing through the retarder 261-1 of the right-eye shutter glass is further delayed as much as 1/4 wavelength and the optical axis is rotated by 90° such that the channel 1 image (a) is transformed into the linearly polarized light of the vertical direction.

However, the liquid crystal cell 262-1 of the right-eye shutter glass of the glasses apparatus 200-1 of the first viewer is off. In this case, the liquid crystal cell 262-1 is operated in the same way as a 1/2 wavelength retarder. That is, the horizontally polarized light is transformed into the vertically polarized light and the vertically polarized light is transformed into the horizontally polarized light by rotating the optical axis by 90°. Accordingly, the channel 1 image (a) is transformed into the linearly polarized light of the horizontal direction and the channel 2 image (b) is transformed into the linearly polarized light of the vertical direction. Since the rear surface polarizer 263-1 blocks light that has a polarization component of a vertical direction, only the channel 1 image (a) finally reaches the right eye like the left eye.

Accordingly, the first viewer 1 wearing the glasses apparatus 200-1 views only the channel 1 image through his/her left and right eyes.

The glasses apparatus 200-2 of the second viewer is operated in a similar method to that of the glasses apparatus 200-1 of the first viewer. However, a liquid crystal cell 252-2 of a left-eye shutter glass of the glasses apparatus 200-2 of the second viewer is off, whereas a liquid crystal cell 262-2 of a right-eye shutter glass is on. Accordingly, the second viewer wearing the glasses apparatus 200-2 views only the channel 2 image through his/her left and right eyes.

Also, the users may view the multi 2D images through passive glasses apparatuses in a similar method. This is another exemplary embodiment for explaining a method for viewing a display image of the display apparatus 100.

Although not shown, it is assumed that the left circularly polarized channel 1 image is output through the first region 131 of the pattern retarder 130 of the display apparatus 100, and the right circularly polarized channel 2 image is output through the second region 132, similarly to the case of FIG. 8. It is assumed that the channel 1 image and the channel 2 image are formed of linearly polarized light having the same horizontal optical axis at the beginning.

At this time, a retarder (not shown) of a left-eye lens of a passive glasses apparatus (not shown) of the first viewer has a phase delay property of a direction opposite to that of the first region 131 of the pattern retarder 130. That is, the retarder generates a 1/4 wavelength phase difference in the opposite direction with respect to the same linearly polarized image. The channel 1 image (a) passing through the retarder of the left-eye lens is restored to the linearly polarized light. On the other hand, since the retarder of the left-eye lens generates a 1/4 wavelength phase difference in the same direction as that of the second region 132 of the pattern retarder 130, the channel 2 image (b) passing through the retarder of the left-eye lens is further delayed as much as 1/4 wavelength and the optical axis is rotated by 90° such that the channel 2 image is transformed into the linearly polarized light of the vertical direction.

Since a rear surface polarizer (not shown) of the left-eye lens of the passive glasses apparatus of the first viewer blocks light that has a polarization component of a vertical direction, only the channel 1 image finally reaches the left eye.

Likewise, a retarder of a right-eye lens of the glasses apparatus of the first viewer has a phase delay property of a direction opposite to that of the second region 132 of the pattern retarder 130. That is, the retarder generates a 1/4 wavelength phase difference in the opposite direction with respect to the same linearly polarized image. Accordingly, the channel 2 image passing through the retarder of the right-eye lens is restored to the linearly polarized light. On the other hand, since the retarder of the right-eye lens generates a 1/4 wavelength phase difference in the same direction as that of the first region 131 of the pattern retarder 130, the channel 1 image passing through the retarder of the right-eye shutter glass is further delayed as much as 1/4 wavelength and the optical axis is rotated by 90° such that the channel 1 image is transformed into the linearly polarized light of the vertical direction.

However, a rear surface polarizer of the right-eye lens of the glasses apparatus of the first viewer blocks light that has a polarization component of a horizontal direction, and only the channel image finally reaches the right eye like the left eye.

Accordingly, the first viewer 1 wearing the passive glasses apparatus views only the channel 1 image through his/her left and right eyes.

A passive glasses apparatus of the second viewer is operated in a similar method to that of the passive glasses apparatus of the first viewer. However, a rear surface polarizer of a left-eye lens of the passive glasses apparatus of the second viewer blocks light that has a polarization component of a vertical direction, whereas a rear surface polarizer of a right-eye lens blocks light that has a polarization component of a horizontal direction. As a result, the second viewer wearing the passive glasses apparatus views only the channel 2 image through his/her left and right eyes.

As described above, the passive glasses apparatus may require a lens having a polarizing plate which has its direction changed according to whether the user views a 3D image or a multi-view image. That is, the passive glasses apparatus may require a lens having a wavelength delay plate or a polarizing filter which has its direction changed according to whether the user views a 3D image or a multi-view image. In the case of a 3D image, polarization properties of the left eye and the right eye are different, whereas, in the case of a multi 2D image, the left eye and the right eye have the same polarization property, but the polarization property is different in each content. Therefore, it is impossible to view both the 3D image and the multi-view image using the passive glasses apparatus which is fixed to one method. As a result, the glasses apparatus should be replaced according to a type of a content.

On the other hand, the above-described glasses apparatus 200 applies voltage to the liquid crystal cell in a different way according to necessity, so that it is possible to view both the multi 2D content and the 3D content using the glasses apparatus 200.

Also, there is a problem that the passive glasses apparatus has no means for transmitting a different sound for each content.

In order to solve the above problem, the glasses apparatus 200 according to another exemplary embodiment further includes an audio output unit (not shown). At this time, when the display mode is the 2D multi view mode in which a plurality of 2D contents are output, the controller 220 controls to receive an audio signal of a 2D content corresponding to the glasses apparatus 200 from among the plurality of 2D contents, and to output the audio signal through the audio output unit (not shown). Likewise, when the display mode is the 3D multi view mode in which a plurality of 3D contents are output, the controller 220 controls to receive an audio signal of a 3D content corresponding to the glasses apparatus 200 from among the plurality of 3D contents, and to output the audio signal through the audio output unit (not shown).

The audio signal may be transmitted to a transmitting mechanism of a sync signal. This will be explained below in detail.

### Operation in Multi 3D Mode

Hereinafter, a display operation in a multi 3D mode will be explained.

In order to implement a multi 3D mode, at least four different image frames are required. That is, a left-eye image frame and a right-eye image frame of a first channel, and a left-eye image frame and a right-eye image frame of a second channel are required. When a pattern retarder method is used, dividing a screen into two regions of different polarization properties makes it impossible to display four images and thus it is necessary to adjust a frame rate. Also, the above-described glasses apparatus 200 uses a change in the polarization property, but does not completely block light. Therefore, a method for allowing only light of one of the four image frames to pass should be considered.

First, the signal processor 110 to adjust a frame rate will be explained.

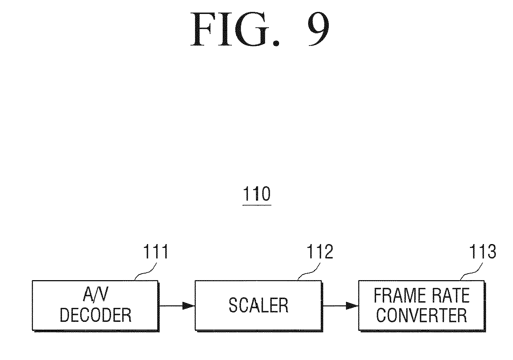

FIG. 9 is a block diagram illustrating the signal processor 110 according to an exemplary embodiment.

Referring to FIG. 9, the signal processor 110 according to an exemplary embodiment includes an A/V decoder 111, a scaler 112, and a frame rate converter 113.

The A/V decoder 111 extracts audio data and video data from an image content signal, and decodes the audio data and the video data.

The scaler 112 is configured to scale image data according to a display screen size. The scaling is performed by multiplying a distribution range of pixel values by an integer so that the distribution range falls within a predetermined range. Up-scaling is performed when the predetermined range is greater than a distribution range of pixel values of initial image data. As a result of the up-scaling, the screen of the image data is magnified in a predetermined ratio. On the other hand, down-scaling is performed when the predetermined range is less than a distribution range of pixel values of input image data. As a result of the down-scaling, the screen of the image data is reduced in a predetermined ratio. Since one pixel value on the input image data may match a plurality of pixel values of the image data screen as a result of the up-scaling, resolution may be reduced.

The frame rate converter 113 is configured to convert a frame rate of the image data. The frame rate refers to a number of image frames output per second. The frame rate converter 113 converts the frame rate of the image content according to an output rate of the display apparatus 100. For example, when the display apparatus 100 is operated at 60Hz, the frame rate converter 113 may set the frame rate of the image content to 60Hz. The frame rate is adjusted in a manner so that, if a small number of image frames are output, a new image frame is created between continuous image frames, and, if a large number of image frames are output, some of the image frames are deleted.

When the display apparatus 100 provides a multi view or a 3D image, the frame rate converter 113 requires a frame rate of a multiple of single image data. For example, when a left-eye image frame and a right-eye image of a 3D content are alternately output, an image frame rate of the 3D content may be set to 60Hz*2=120Hz. Accordingly, it is possible to output the image frames 120 times per second and to output the left-eye image frame and the right-eye image frame alternately 60 times per second for each.

Displaying alternately means that an image frame of one content is displayed first and then an image frame of the other content is displayed, and refers to displaying image frames of different contents alternately. For example, if the image frames of the one content are A, B, C, D, ...z, and the image frames of the other content are a, b, c, d, ..., z, the image frames are displayed in order of A, a, B, b, C, c, ..., Z, z.

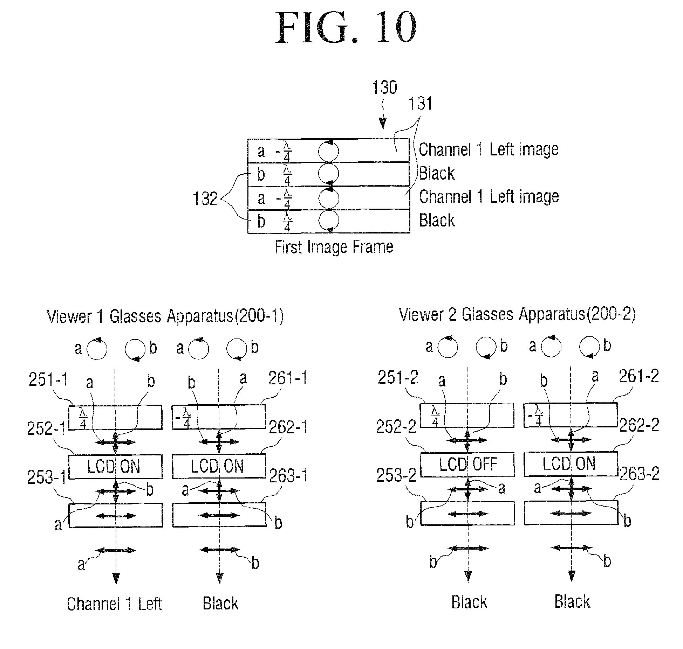

In the case of the multi 3D mode, it is possible to display the content by adjusting the frame rate through the frame rate converter 113. This will be explained in detail with reference to FIGS. 10 to 13.

FIGS. 10 to 13 are views illustrating an operation of a glasses apparatus when first to fourth images frames are displayed in a multi 3D mode according to an exemplary embodiment.

Referring to FIG. 10, a first image frame outputs a left circularly polarized channel 1 left-eye image (a) through the first region 131 of the pattern retarder 130 of the display apparatus 100, and outputs a right circularly polarized black image (b) through the second region 132. It is assumed that all images are formed of linearly polarized light having the same horizontal optical axis at the beginning. Also, it is assumed that the liquid crystal cell allows light to pass therethrough as it is when voltage is on, and delays a phase as much as 1/2 wavelength (rotates the optical axis by 90°) when voltage is off. Of course, the liquid crystal cell may be operated in the opposite way according to an exemplary embodiment. Also, it is assumed that the rear surface polarizers 253-1 and 263-1 block light that has a polarization component of a vertical direction. The rear surface polarizers 253-1 and 263-1 may be operated in the opposite way according to an exemplary embodiment.

The retarder 251-1 of the left-eye shutter glass of the glasses apparatus 200-1 of the first viewer has a phase delay property of a direction opposite to that of the first region 131 of the pattern retarder 130. That is, the retarder 251-1 generates a 1/4 wavelength phase difference in the opposite direction with respect to the same linearly polarized image. The channel 1 left-eye image (a) passing through the retarder 251-1 of the left-eye shutter glass is restored to the linearly polarized light. On the other hand, since the retarder 251-1 of the left-eye shutter glass generates a 1/4 wavelength phase difference in the same direction as that of the second region 132 of the pattern retarder 130, the black image (b) passing through the retarder 251-1 of the left-eye shutter glass is further delayed as much as 1/4 wavelength and the optical axis is rotated by 90° such that the black image (b) is transformed into the linearly polarized light of the vertical direction.

Since the liquid crystal cell 252-1 of the left-eye shutter glass of the glasses apparatus 200-1 of the first viewer is on, it allows the horizontally polarized channel 1 left-eye image and the vertically polarized black image to pass therethrough as they are. Also, since the rear surface polarizer 253-1 blocks light that has a polarization component of a vertical direction, only the channel 1 left-eye image (a) finally reaches the left eye. The retarder 261-1 of the right-eye shutter glass of the glasses apparatus 200-1 of the first viewer has a phase delay property of a direction opposite to that of the second region 132 of the pattern retarder 130. That is, the retarder 261-1 generates a 1/4 wavelength phase difference in the opposite direction with respect to the same linearly polarized image. Accordingly, the black image (b) passing through the retarder 261-1 of the right-eye shutter glass is restored to the linearly polarized light of the horizontal direction. On the other hand, since the retarder 261-1 of the right-eye shutter glass generates a 1/4 wavelength phase difference in the same direction as that of the first region 131 of the pattern retarder 130, the channel 1 left-eye image (a) passing through the retarder 261-1 of the right-eye shutter glass is further delayed as much as 1/4 wavelength and the optical axis is rotated by 90° such that the channel 1 left-eye image (a) is transformed into the linearly polarized light of the vertical direction.

Since the liquid crystal cell 262-1 of the right-eye shutter glass of the glasses apparatus 200-1 of the first viewer is on, it allows the horizontally polarized black image (b) and the vertically polarized channel 1 left-eye image (a) to pass therethrough as they are. Also, since the rear surface polarizer 263-1 blocks light that has a polarization component of a vertical direction, only the black image (b) finally reaches the right eye.

Accordingly, the first viewer wearing the glasses apparatus 200-1 views only the channel 1 left-eye image through his/her left eye and views only the black image through his/her right eye.

The glasses apparatus 200-2 of the second viewer is operated in a similar method to that of the glasses apparatus 200-1 of the first viewer. The second viewer wearing the glasses apparatus 200-2 views only the black image through his/her left and right eyes.

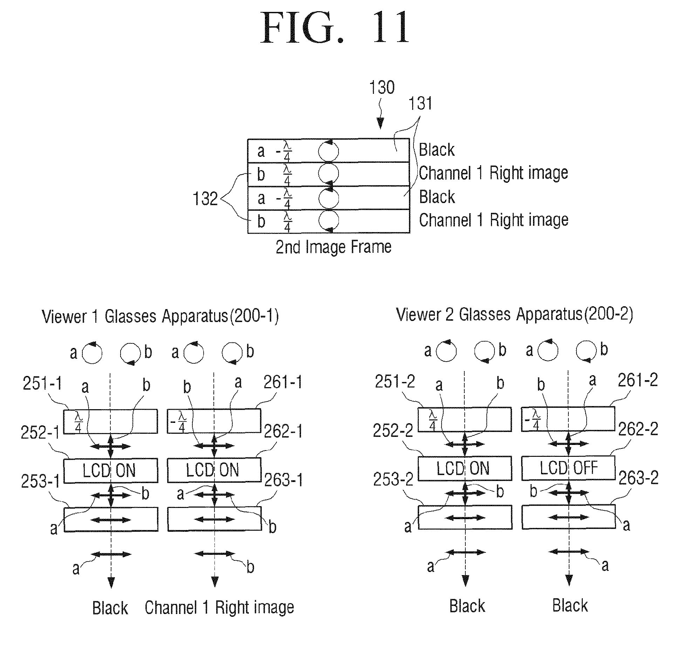

Referring to FIG. 11, a second image frame outputs a left circularly polarized black image (a) through the first region 131 of the pattern retarder 130 of the display apparatus 100, and outputs a right circularly polarized channel 1 right-eye image (b) through the second region 132. It is assumed that all images are formed of linearly polarized light having the same horizontal optical axis at the beginning. Also, it is assumed that the liquid crystal cell allows light to pass therethrough as it is when voltage is on, and delays a phase as much as 1/2 wavelength when voltage is off. Of course, the liquid crystal cell may be operated in the opposite way according to an exemplary embodiment. Also, it is assumed that the rear surface polarizer 253 blocks light that has a polarization component of a vertical direction. The rear surface polarizer 253 may be operated in the opposite way according to an exemplary embodiment.

The retarder 251-1 of the left-eye shutter glass of the glasses apparatus 200-1 of the first viewer has a phase delay property of a direction opposite to that of the first region 131 of the pattern retarder 130. That is, the retarder 251-1 generates a 1/4 wavelength phase difference in the opposite direction with respect to the same linearly polarized image. The black image (a) passing through the retarder 251-1 of the left-eye shutter glass is restored to the linearly polarized light. On the other hand, since the retarder 251-1 of the left-eye shutter glass generates a 1/4 wavelength phase difference in the same direction as that of the second region 132 of the pattern retarder 130, the channel 1 right-eye image (b) passing through the retarder 251-1 of the left-eye shutter glass is further delayed as much as 1/4 wavelength and the optical axis is rotated by 90° such that the channel 1 right-eye image (b) is transformed into the linearly polarized light of the vertical direction.

Since the liquid crystal cell 252-1 of the left-eye shutter glass of the glasses apparatus 200-1 of the first viewer is on, it allows the horizontally polarized black image (a) and the vertically polarized channel 1 right-eye image (b) to pass therethrough as they are. Also, since the rear surface polarizer 253-1 blocks light that has a polarization component of a vertical direction, only the black image (a) finally reaches the left eye.

On the other hand, the retarder 261-1 of the right-eye shutter glass of the glasses apparatus 200-1 of the first viewer has a phase delay property of a direction opposite to that of the second region 132 of the pattern retarder 130. That is, the retarder 261-1 generates a 1/4 wavelength phase difference in the opposite direction with respect to the same linearly polarized image. Accordingly, the channel 1 right-eye image (b) passing through the retarder 261-1 of the right-eye shutter glass is restored to the linearly polarized light. On the other hand, since the retarder 261-1 of the right-eye shutter glass generates a 1/4 wavelength phase difference in the same direction as that of the first region 131 of the pattern retarder 130, the black image (a) passing through the retarder 261-1 of the right-eye shutter glass is further delayed as much as 1/4 wavelength and the optical axis is rotated by 90° such that the black image (a) is transformed into the linearly polarized light of the vertical direction.

Since the liquid crystal cell 262-1 of the right-eye shutter glass of the glasses apparatus 200-1 of the first viewer is on, it allows the horizontally polarized channel 1 right-eye image (b) and the vertically polarized black image (a) to pass therethrough as they are. Also, since the rear surface polarizer 263-1 blocks light that has a polarization component of a vertical direction, only the channel 1 right-eye image (b) finally reaches the right eye.

Accordingly, the first viewer wearing the glasses apparatus 200-1 views only the black image (a) through his/her left eye and views only the channel 1 right-eye image (b) through his/her right eye.

The glasses apparatus 200-2 of the second viewer is operated in a similar method to that of the glasses apparatus 200-1 of the first viewer. The second viewer wearing the glasses apparatus 200-2 views only the black image (a) through his/her left and right eyes.

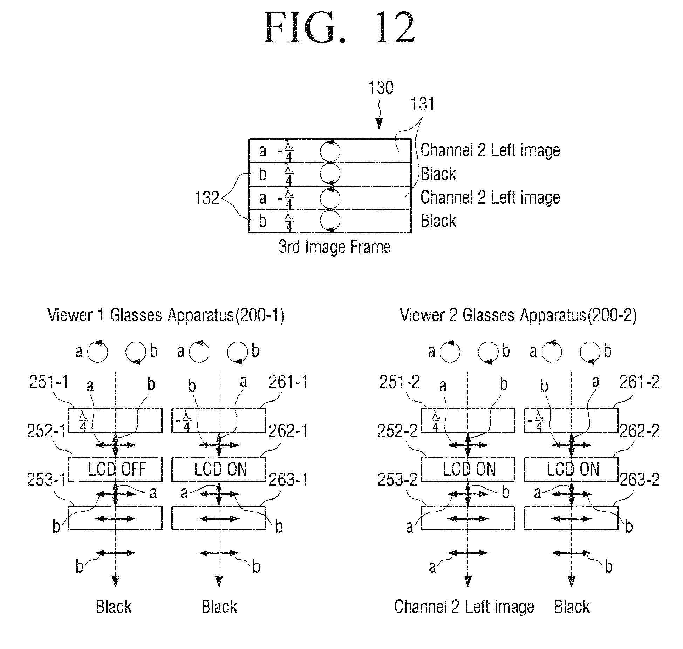

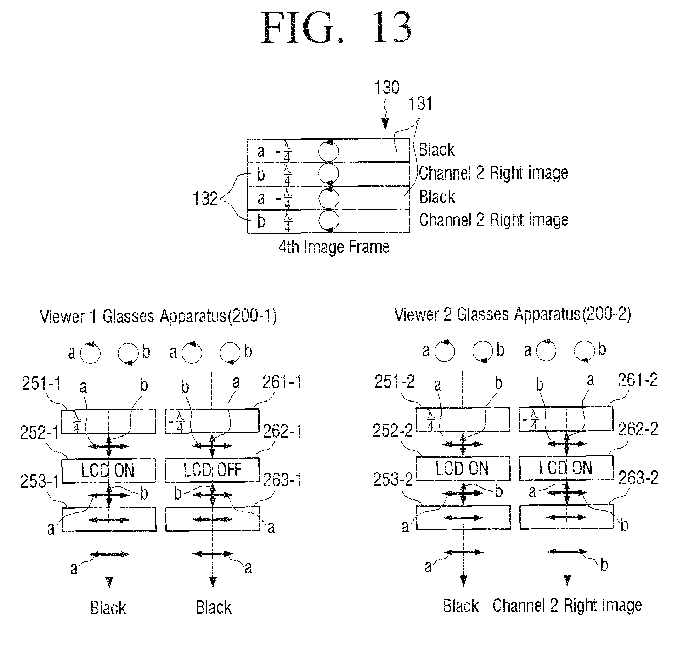

In the cases of FIGS. 12 and 13, the glasses apparatuses are operated in the same way as described above.

In FIG. 12, a first region of a third image frame displays a left-eye image (a) of a second channel, and a second region displays a black image (b). At this time, the first viewer wearing the glasses apparatus 200-1 views the black image (b) through his/her left and right eyes, and the glasses apparatus 200-2 of the second viewer allows the left-eye image (a) of the second channel to pass through the left-eye shutter glass, and allows the black image (b) to pass through the right-eye shutter glass.

In FIG. 13, a first region of a fourth image frame displays a black image (a), and a second region displays a channel 2 right-eye image (b). At this time, the glasses apparatus 200-1 of the first viewer allows the black image (a) to pass through the left-eye and right-eye shutter glasses, and the glasses apparatus 200-2 of the second viewer allows the black image (a) to pass through the left-eye shutter glass, and allows the channel 2 right-eye image (b) to pass through the right-eye shutter glass.

As described above, the multi 3D mode requires the frame rate to be increased, and also, it is necessary to drive the liquid crystal cell differently according to a display timing of each image frame. That is, synchronization between the display apparatus 100 and the glasses apparatus 200 is required.

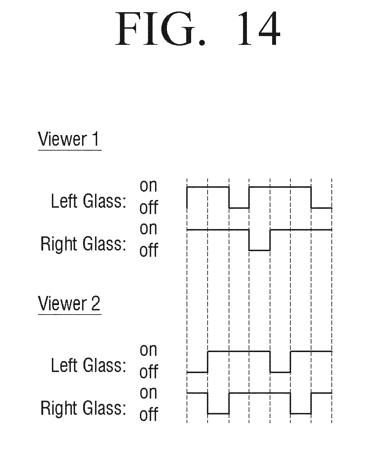

FIG. 14 is a view illustrating a driving voltage of a liquid crystal cell.

Referring to FIG. 14, to the left-eye shutter glass of the first viewer, voltage is applied in the first image frame, voltage is applied in the second image frame, voltage is not applied in the third image frame, and voltage is applied in the fourth image frame. In this manner, a series of voltage driving operations are repeated.

To the right-eye shutter glass of the first viewer, voltage is applied in first to third image frames and voltage is not applied in the fourth image frame. In this manner, a series of voltage driving operations are repeated.

To the left-eye shutter glass of the second viewer, voltage is not applied in the first image frame and voltage is applied to second to fourth image frames. In this manner, a series of voltage driving operations are repeated.

To the right-eye shutter glass of the second viewer, voltage is applied in the first image frame, voltage is not applied in the second image frame, and voltage is applied in the third and fourth image frames. In this manner, a series of voltage driving operations are repeated.

When the black image is inserted into the image frames and displayed as described above, cross talk can be prevented effectively.

Since there is an effect of reducing cross talk, the method of inserting and displaying the black image may be considered in the multi 2D mode. The same principle as described above is applied and thus is explained below briefly.

FIGS. 15 to 18 are views illustrating an operation of a glasses apparatus when first to fourth images frames are displayed in a multi 2D mode according to another exemplary embodiment.

Referring to FIG. 15, a first image frame outputs a left circularly polarized channel 1 left-eye odd image (a) through the first region 131 of the pattern retarder 130 of the display apparatus 100, and outputs a right circularly polarized black image (b) through the second region 132. It is assumed that all images are formed of linearly polarized light having the same horizontal optical axis at the beginning. Also, it is assumed that the liquid crystal cell allows light to pass therethrough as it is when voltage is on, and rotates the optical axis by 90° (delays a phase as much as 1/2 wavelength) when voltage is off. Of course, the liquid crystal cell may be operated in the opposite way according to an exemplary embodiment. In this case, it is assumed that the rear surface polarizer 253-1 of the left-eye shutter glass of the glasses apparatus 200-1 of the first viewer 1 and the rear surface polarizer 263-1 of the right-eye shutter glass block light that has a polarization component of a vertical direction. The rear surface polarizers 253-1 and 263-1 may be operated in the opposite way according to an exemplary embodiment, or may block light of different directions.

The retarder 251-1 of the left-eye shutter glass of the glasses apparatus 200-1 of the first viewer has a phase delay property of a direction opposite to that of the first region 131 of the pattern retarder 130. That is, the retarder 251-1 generates a 1/4 wavelength phase difference in the opposite direction with respect to the same linearly polarized image. The channel 1 odd image (a) passing through the retarder 251-1 of the left-eye shutter glass is restored to the linearly polarized light. On the other hand, since the retarder 251-1 of the left-eye shutter glass generates a 1/4 wavelength phase difference in the same direction as that of the second region 132 of the pattern retarder 130, the black image (b) passing through the retarder 251-1 of the left-eye shutter glass is further delayed as much as 1/4 wavelength and the optical axis is rotated by 90° such that the black image (b) is transformed into the linearly polarized light of the vertical direction.

Since the liquid crystal cell 252-1 of the left-eye shutter glass of the glasses apparatus 200-1 of the first viewer is on, it allows the horizontally polarized channel 1 left-eye odd image (a) and the vertically polarized black image (b) to pass therethrough as they are. Also, since the rear surface polarizer 253-1 blocks light that has a polarization component of a vertical direction, only the channel 1 odd image (a) finally reaches the left eye.

The retarder 261-1 of the right-eye shutter glass of the glasses apparatus 200-1 of the first viewer has a phase delay property of a direction opposite to that of the second region 132 of the pattern retarder 130. That is, the retarder 261-1 generates a 1/4 wavelength phase difference in the opposite direction with respect to the same linearly polarized image. Accordingly, the black image (b) passing through the retarder 261-1 of the right-eye shutter glass is restored to the linearly polarized light. On the other hand, since the retarder 261-1 of the right-eye shutter glass generates a 1/4 wavelength phase difference in the same direction as that of the first region 131 of the pattern retarder 130, the channel 1 odd image (a) passing through the retarder 261-1 of the right-eye shutter glass is further delayed as much as 1/4 wavelength and the optical axis is rotated by 90° such that the channel 1 odd image (a) is transformed into the linearly polarized light of the vertical direction.

Since the liquid crystal cell 262-1 of the right-eye shutter glass of the glasses apparatus 200-1 of the first viewer is off, it phase-delays the horizontally polarized black image (b) and the vertically polarized channel 1 odd image (a). Also, since the rear surface polarizer 263-1 blocks light that has a polarization component of a horizontal direction, only the channel 1 odd image (a) finally reaches the right eye.

Accordingly, the first viewer wearing the glasses apparatus 200-1 views only the channel 1 odd image (a) through his/her left and right eyes, and does not view the black image (b).

The glasses apparatus 200-2 of the second viewer is operated in a similar method to that of the glasses apparatus 200-1 of the first viewer. The second viewer wearing the glasses apparatus 200-2 views only the black image (b) through his/her left and right eyes.

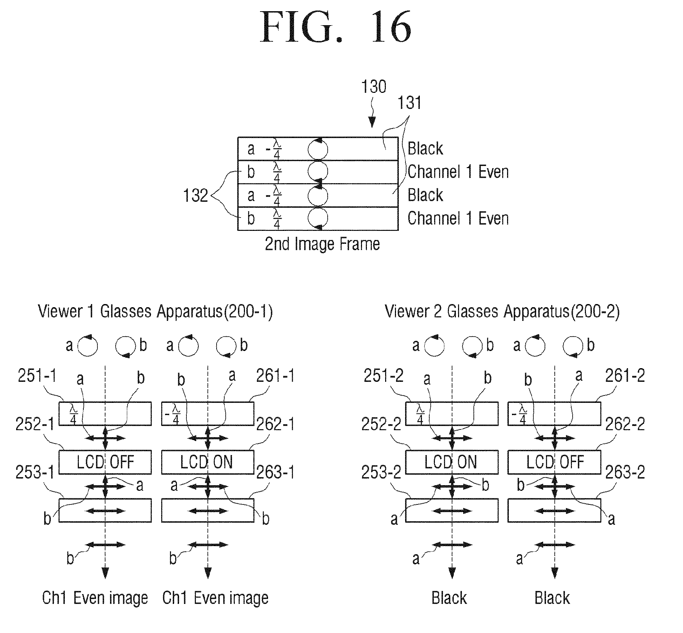

FIG. 16 illustrates an operation of a glasses apparatus when a second image is displayed. In the case of FIG. 16, a black image (a) is displayed on the first region and a channel 1 even image (b) is displayed on the second region. As the glasses apparatuses are operated similarly to the case of FIG. 15, the first viewer wearing the glasses apparatus 200-1 views only the channel 1 even image (b) through his/her left and right eyes, and the second viewer wearing the glasses apparatus 200-2 views only the black image through his/her left and right eyes. Herein, the channel 1 even image is the same as the channel 1 odd image. The same user views the same image through two continuous image frames, and in particular, since display regions of the images are different, the user may not feel that resolution is greatly reduced. That is, this case has an advantage in view of resolution in comparison with the case in which image data is displayed only through an odd line or an even line of the display apparatus, which will be described below.

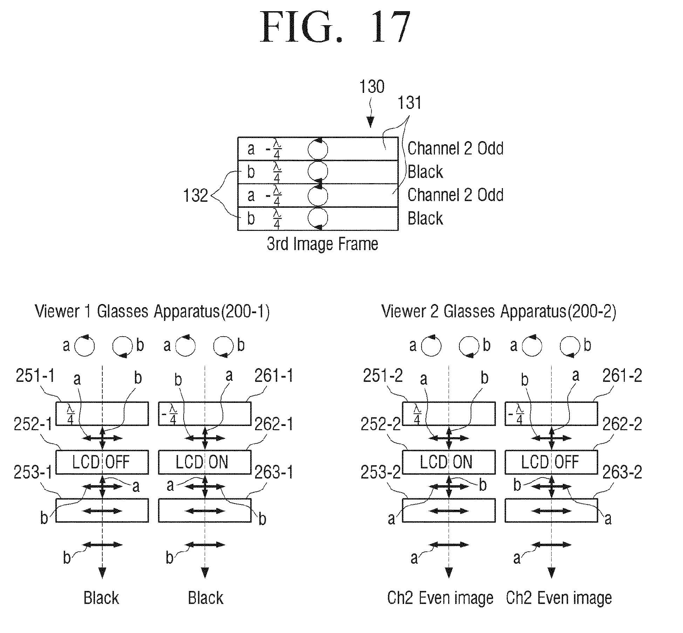

In the cases of FIGS. 17 and 18, the glasses apparatuses are operated in the same way as described above.

In FIG. 17, a channel 2 odd image (a) is displayed on a first region of a third image frame and a black image (b) is displayed on a second region. At this time, the first viewer of the glasses apparatus 200-1 views the black image (b) through his/her left and right eyes, and the left-eye and right-eye shutter glasses of the glasses apparatus 200-2 of the second viewer allow the channel 2 odd image (a) to pass therethrough.

In FIG. 18, a black image (a) is displayed on a first region of a fourth image frame and a channel 2 even image (b) is displayed on a second region. At this time, the left-eye and right-eye shutter glasses of the glasses apparatus 200-1 of the first viewer allow the black image (a) to pass therethrough, and the left-eye and right-eye shutter glasses of the glasses apparatus 200-2 of the second viewer allow the channel 2 even image (b) to pass therethrough.

However, the above-described exemplary embodiments are merely examples and voltage may be driven differently. For example, when the polarization direction of the rear surface polarizers 253 and 263 is changed or the phase delay property of the retarders 251 and 261 is changed, the method for driving the liquid crystal cells 252 and 262 should also be changed.

The above-described operation of the glasses apparatus 200 is related to a display method of the display apparatus 100. In the above-described exemplary embodiments, the image data is output from an odd line and an even line of the display panel alternately.

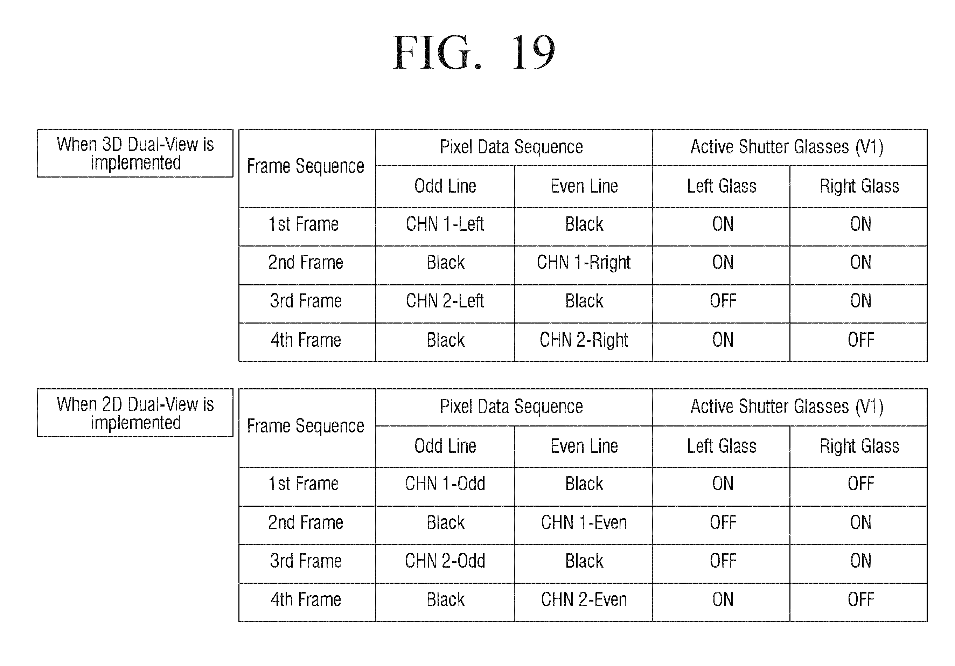

FIG. 19 is a view to explain an operation of a glasses apparatus when image data is changed alternately in odd and even lines of a pattern retarder display apparatus.

As described in the above exemplary embodiments, when image data is displayed alternately in odd and even lines of the display apparatus 100, the glasses apparatus 200 is operated as shown in FIG. 19. In this case, since the same image is alternately displayed in different lines, reduction of resolution that the user feels is not great even if a frame rate increases. However, unlike this, the display apparatus 100 may change and output the image only in the odd line and may output only the black image in the even line.

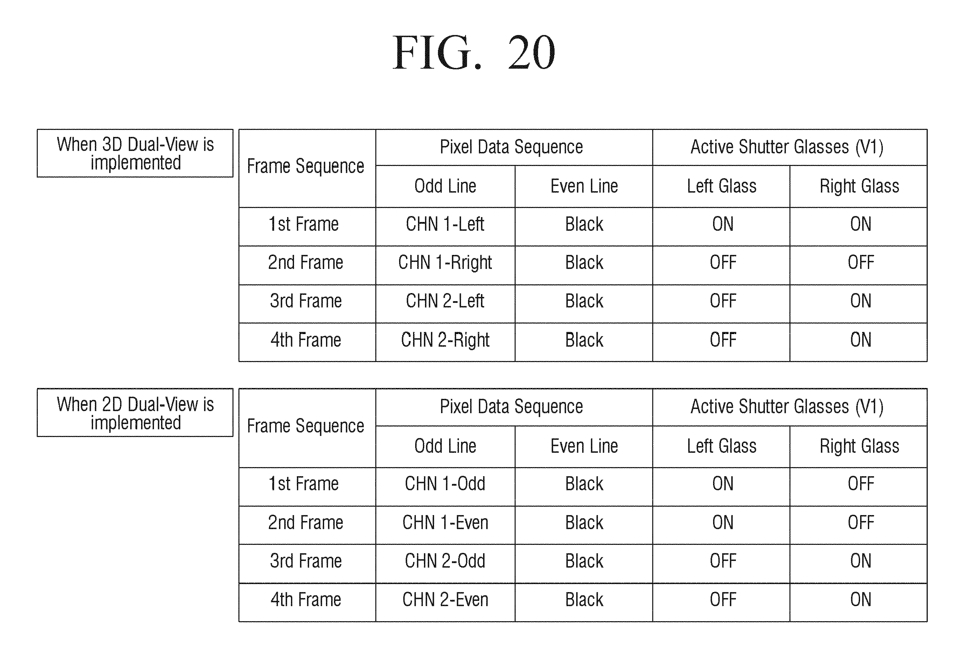

FIG. 20 is a view to explain an operation of a glasses apparatus when image data is changed only in an odd line of a pattern retarder display apparatus.

As shown in FIG. 20, the display apparatus 100 may change and output an image only in an odd line, and output only a black image in an even line, or may change and output an image only in the even line and output only a black image in the odd line. In this case, since the display apparatus 100 is not required to display the image on some panel region, it has an advantage in view of low power consumption.

On the other hand, since it is necessary to synchronize a display timing of the display apparatus 100 and driving of the liquid crystal cell of the glasses apparatus 200, the display apparatus 100 transmits sync information to the glasses apparatus 200.

The communication unit 140 of the display apparatus 100 described above according the exemplary embodiment may include a Bluetooth module and may transmit a sync signal which is generated by the sync signal generator 170 to the glasses apparatus 200 through the Bluetooth module.

The Bluetooth communication technology refers to a short distance wireless communication method that transmits data streams in a data packet format using 2402∼2480MHz, except for a range of industrial scientific and medical (ISM) 2MHz to 2400MHz and 3.5MHz to 2483.5 MHz, and 79 channels in total.

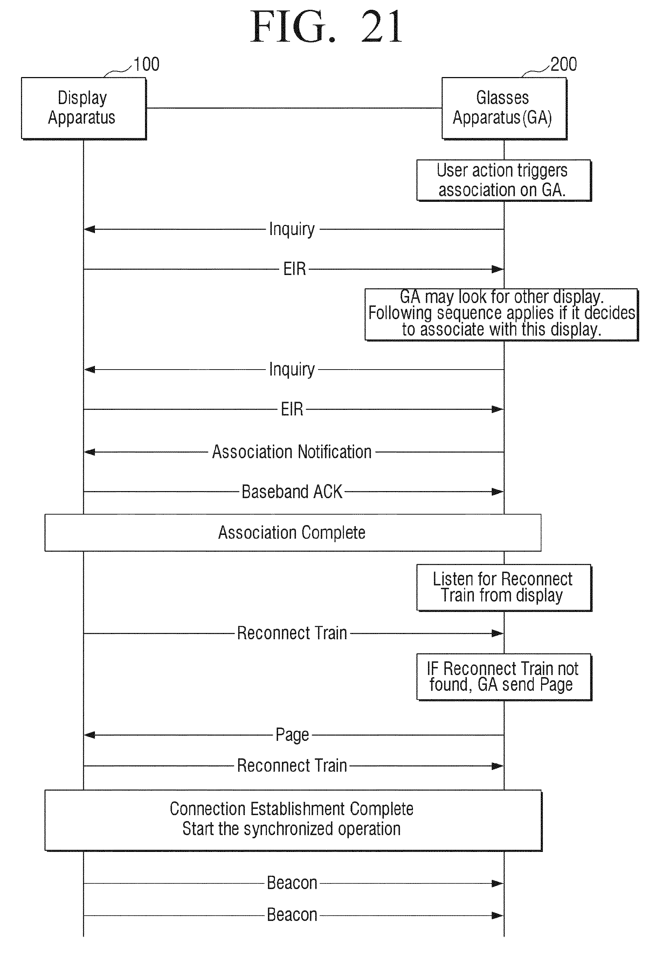

FIG. 21 is a view to explain a method for transmitting a sync signal to the glasses apparatus 200 using Bluetooth technology.

Referring to FIG. 21, when the Bluetooth communication technology is used, the glasses apparatus (GA) 200 searches for a display apparatus to be synchronized therewith. The glasses apparatus 200 identifies the display apparatus 100 to be synchronized according to a result of the searching.

The process of identifying the display apparatus 100 is performed as follows. The glasses apparatus 200 transmits an inquiry message to the display apparatus 100. The display apparatus 100 receives the inquiry message from the glasses apparatus 200 and listens to the message.

The display apparatus 100 transmits an extended inquiry response (EIR) packet including a path loss threshold to the glasses apparatus 200. At this time, the EIR packet may include information such as test mode for Bluetooth qualification body test and path loss threshold.

The glasses apparatus 200 transmits an association notification packet requesting association with the display apparatus 100 to the display apparatus 100 according to a path loss value. At this time, the glasses apparatus 200 may transmit the association notification packet only when the path loss value is less than the path loss threshold.

When receiving the association notification packet requesting association based on the path loss value from the glasses apparatus 200, the display apparatus 100 transmits a baseband ACK to the glasses apparatus 200 in response to the association notification packet. Therefore, the association is completed.

After that, the display apparatus 100 transmits transport timing information of a beacon packet including a control signal of the glasses apparatus 200 to the glasses apparatus 200. This process may include transmitting a reconnect train packet including the transport timing information of the beacon packet to the glasses apparatus 200, and, when the glasses apparatus 200 does not find the reconnect train packet within a predetermined time, receiving a page packet from the glasses apparatus 200. The reconnect train packet is formed without frequency hopping.

At this time, the beacon packet includes a left shutter open offset or a video stream 1 in a dual-view mode, a left shutter close offset or a video stream 1 in a dual-view mode, a right shutter open offset or a video stream 2 in a dual-view mode, a right shutter close offset or a video stream 2 in a dual-view mode, and frame sync period (integer)/frame sync period (fraction), besides a Bluetooth clock at a rising edge of a frame sync.

After that, the display apparatus 100 transmits the beacon packet to the glasses apparatus 200 according to the transport timing information. The glasses apparatus 200 turns on or off the shutter glasses according to a display timing of an image frame of a content corresponding thereto with reference to the received beacon packet.

Although the display apparatus 100 and the glasses apparatus 200 communicate with each other in the Bluetooth communication method in the above-described exemplary embodiment, the communication may be performed by forming a communication channel using various short distance communication methods including infrared ray (IR) communication, Zigbee, and near field communication (NFC).

For example, the display apparatus 100 may transmit IR sync signals having different frequencies to the glasses apparatus 200. In this case, the glasses apparatus 200 receives a sync signal having a specific frequency and turns on or off the shutter glasses according to a display timing of a corresponding content.

In this case, the communication unit 140 may transmit an IR signal in which a high level of a first period and a low level of a second period are alternately repeated at predetermined time intervals based on sync information to the glasses apparatus 200. The glasses apparatus 200 may turn on the shutter glasses during the first period of the high level, and may turn off the shutter glasses during the second period of the low level.

Besides these, the sync signal may be generated in various ways.

In addition to the above-described sync signal, an audio signal may be transmitted to the glasses apparatus 200 by the same means. That is, in the case of a multi 2D mode or multi 3D mode, an audio signal of each content may be transmitted to the glasses apparatus 200 in the above-described method.

Although the multi 2D image is displayed without changing the frame rate in the above-described exemplary embodiments, the multi 2D image may be displayed using a black image. Hereinafter, an exemplary embodiment of this case will be explained briefly.

Also, a user control command is required in order to control the operation of the glasses apparatus 200. Hereinafter, an exemplary embodiment of this case will be explained.

FIG. 22 is a view illustrating an exterior of the glasses apparatus 200 according to an exemplary embodiment.

Referring to FIG. 22, the glasses apparatus 200 according to an exemplary embodiment further includes an input unit 270 to receive user input.

The user inputs a display mode by manipulating the input unit 270 of the glasses apparatus 200. That is, the user may set one of a single 2D mode, a multi 2D mode, a single 3D mode, and a multi 3D mode by manipulating the input unit 270. A display mode setting signal input through the input unit 270 is transmitted to the display apparatus 100 through the communication unit (not shown) of the glasses apparatus 200.

When the display apparatus 100 identifies the display mode and transmits at least one of the sync signal and the audio signal to the glasses apparatus 200 according to the identified display mode, the controller 220 receives the at least one of the sync signal and the audio signal and controls to supply power to at least one of the first shutter glass and the second shutter glass.

The input unit 270 may be implemented by using one of a switch, a button, a touch pad, and a toggle button. FIG. 22 illustrates the glasses apparatus 200 including a switch. When the glasses apparatus 200 is provided with two switches 270 as shown in FIG. 22, a 3D or 2D mode may be determined by one switch and a multi view mode or a single view mode may be determined the other switch.

### Display Method and Method for Operating Glasses Apparatus

Hereinafter, a display method according to various exemplary embodiment will be explained.

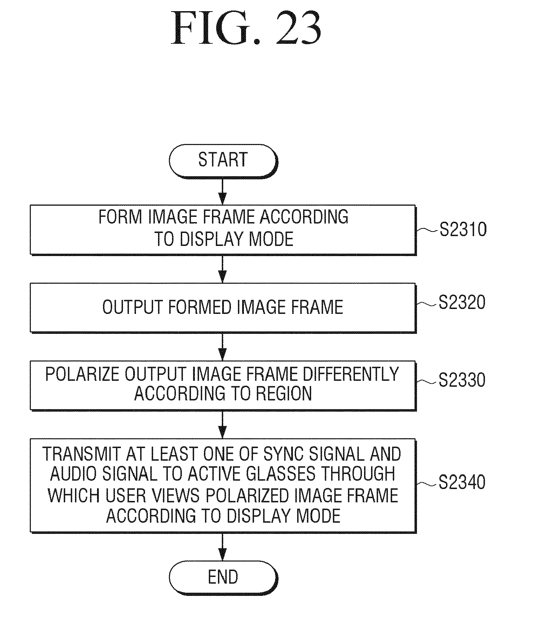

FIG. 23 is a flowchart illustrating a display method according to various exemplary embodiments.

Referring to FIG. 23, a display method according to an exemplary embodiment includes configuring an image frame according to a display mode (S2310), outputting the configured image frame (S2320), polarizing the output image frame differently in each region (S2330), and transmitting at least one of a sync signal and an audio signal to active glasses through which a user views the polarized image frame according to the display mode (S2340).

The display mode is one of a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

The polarizing may left circularly polarize a first region of the output image frame and may right circularly polarize a second region.

When the display mode is the 2D multi view mode, the first region of the image frame indicates a first 2D content image, and the second region indicates a second 2D content image. The transmitting may transmit an audio signal corresponding to the glasses apparatus to the glasses apparatus.

When the display mode is the 3D single view mode, the image frame may be configured so that the first region of the image frame indicates a left-eye image of the 3D content and the second region indicates a right-eye image of the 3D content.

When the display mode is the 3D multi view mode, the image frame may include: a first image frame in which the first region indicates a left-eye image of a first 3D content and the second region indicates a black image; a second image frame in which the first region indicates a black image and the second region indicates a right-eye image of the first 3D content; a third image frame in which the first region indicates a left-eye image of a second 3D content and the second region indicate a black image; and a fourth image frame in which the first region indicates a black image and the second region indicates a right-eye image of the second 3D content. The outputting may output the first image frame, the second image frame, the third image frame, and the fourth image frame in sequence.

Also, when the display mode is the 3D multi view mode, the transmitting the sync signal includes transmitting transport timing information of a beacon packet to the glasses apparatus based on a message received from the glasses apparatus, and transmitting the beacon packet to the glasses apparatus according to the transport timing information.

Each operation has been described and a redundant explanation is omitted.

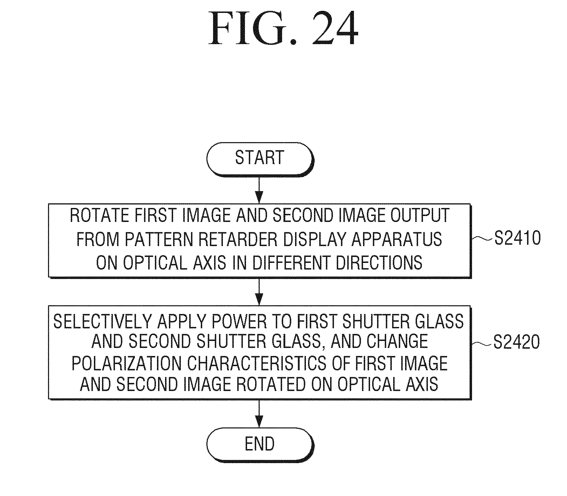

FIG. 24 is a flowchart illustrating a method for operating a glasses apparatus according to an exemplary embodiment.

Referring to FIG. 24, a method for operating a glasses apparatus according to various exemplary embodiments includes rotating optical axes of a first image and a second image which are output from a pattern retarder display apparatus in different directions (S2410), and selectively applying power to a first shutter glass and a second shutter glass and changing polarization properties of the first image and the second image the optical axes of which are rotated (S2420). Each operation has been described and a redundant explanation is omitted.

### Recording Medium

The display apparatus, the glasses apparatus, the display method, and the method for operating the glasses apparatus described above may be implemented by using a program including an algorithm executable in a computer, and the program may be stored in a non-transitory computer readable medium and provided to implement exemplary embodiments.

The non-transitory computer readable medium refers to a medium that stores data semi-permanently rather than storing data for a very short time, such as a register, a cache, and a memory, and is readable by an apparatus. Specifically, the above-described various applications or programs may be stored in a non-transitory computer readable medium such as a compact disc (CD), a digital versatile disk (DVD), a hard disk, a Blu-ray disk, a universal serial bus (USB) memory stick, a memory card, and a read only memory (ROM), and may be provided to implement exemplary embodiments.

According to the exemplary embodiments described above, the user can view both the 3D image and the multi-view image by controlling the operation of the glasses apparatus without replacing a lens.

Also, in the multi-view mode, a sound of each content is transmitted to the glasses apparatus so that the user can hear the sound of each content through the glasses apparatus.

In addition, a plurality of viewers can view a plurality of different 3D contents through glasses apparatuses of a pattern retarder method.

As discussed, embodiments of the invention can provide a glasses apparatus comprising: a first retarder configured to delay phases of a first image and a second image which are output from a display apparatus simultaneously; a second retarder configured to delay the phases of the first image and the second image in a direction different from that of the first retarder; a first shutter glass and a second shutter glass configured to change polarization properties of the first image optical axis and the second image optical axis, wherein the first shutter glass and a second shutter glass are configured to rotate the respective optical axis of the first image and the of the second image according to whether power is supplied to them or not; and a controller configured to control to selectively the supply the of power to the first shutter glass and the second shutter glass so that a user selectively views the first image and the second image.

Embodiments of the invention can provide a system comprising: at least one glasses apparatus according to any one of the above mentioned embodiments; and a display apparatus. In some embodiments, the display apparatus comprises: a signal processor arranged to configure an image frame according to a display mode; a display configured to output the image frame configured by the signal processor; a pattern retarder configured to polarize the output image frame differently in each region; a communicator configured to transmit at least one from among a sync signal and an audio signal to the at least one glasses apparatus, the at least one glasses apparatus configured to allow a user to view the image frame polarized differently in each region; and a controller configured to control to transmit at least one from among a sync signal and the audio signal to the at least one glasses apparatus according to the display mode.

As discussed, embodiments of the invention can provide a display apparatus comprising: a signal processor which configures an image frame according to a display mode; a display configured to output the image frame configured by the signal processor; a pattern retarder configured to polarize the output image frame differently in each region; a communicator configured to transmit at least one from among a sync signal and an audio signal to a glasses apparatus, the glasses apparatus allowing a user to view the image frame polarized differently in each region; and a controller configured to control to transmit at least one from among a sync signal and an audio signal to the glasses apparatus according to the display mode, wherein the display mode is one from among a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.

As discussed, embodiments of the invention can provide a method for operating a glasses apparatus, the method comprising: rotating optical axes of a first image and a second image which are output from a display apparatus, in different directions; and selectively supplying power to a first shutter glass and a second shutter glass and changing polarization properties of the first image and the second image, the optical axes of which are rotated.

In some embodiments, the method further comprises receiving an audio signal from the display apparatus; and outputting the received audio signal.

In the above mentioned embodiments, polarizations have been described as illustrations. It will be appreciated that the principles of the invention could be implemented with other Polarization configurations.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A glasses apparatus comprising:
a first retarder configured to delay phases of a first image and a second image which are output from a display apparatus simultaneously;
a second retarder configured to delay the phases of the first image and the second image in a direction different from that of the first retarder;
a first shutter glass and a second shutter glass configured to change polarization properties of the first image and the second image having a respective optical axis, which are rotated according to whether power is supplied or not; and
a controller configured to control the supply of power to the first shutter glass and the second shutter glass so that a user selectively views the first image and the second image.

2. The glasses apparatus as claimed in claim 1, wherein the first shutter glass and the second shutter glass comprise, respectively:
a first liquid crystal cell and a second liquid crystal cell which have their orientations switched when the power is supplied, and allow the first image and the second image, the optical axes of which are rotated, to pass therethrough according to the switched orientations; and
a first polarizer and a second polarizer which polarize images passing through the first liquid crystal cell and the second liquid crystal cell, respectively.

3. The glasses apparatus as claimed in claim 1 or 2, further comprising:
a communicator configured to receive an audio signal from the display apparatus; and
an audio outputter configured to output the received audio signal.

4. The glasses apparatus as claimed in claim 1 to 3, further comprising a communicator configured to receive a sync signal from the display apparatus,
wherein the controller is arranged to controls to the supply of the power to the first shutter glass and the second shutter glass according to the received sync signal.

5. The glasses apparatus as claimed in claim 3 or 4, wherein, when the display apparatus is arranged to display a plurality of 2D contents, the controller is arranged to control to receive an audio signal of a 2D content corresponding to the glasses apparatus from among the plurality of 2D contents, and output the received audio signal through the audio outputter.

6. The glasses apparatus as claimed in any one of claims 1 to 5, wherein, when the display apparatus is arranged to display a plurality of 2D contents, the controller is arranged to control the supply of power only to one from among the first shutter glass and the second shutter glass.

7. The glasses apparatus as claimed in any one of claims 1 to 6, wherein, when the display apparatus is arranged to display a single 3D content, the controller is arranged to control the supply of power to both the first shutter glass and the second shutter glass or not to supply power.

8. The glasses apparatus as claimed in claim 4 or any one of claims 5 to 7 when dependent on claim 4, wherein, when the display apparatus is arranged to display a plurality of 3D contents, according to the received sync signal, the controller is arranged to controls to perform a first operation and a second operation which supply power to the first shutter glass and the second shutter glass, respectively; a third operation which does not supply power to the first shutter glass and supplies power to the second shutter glass; and a fourth operation which supplies power to the first shutter glass and does not supply power to the second shutter glass, in sequence.

9. The glasses apparatus as claimed in claim 4 or any one of claims 5 to 7 when dependent on claim 4, wherein, when the display apparatus is arranged to display a plurality of 3D contents, according to the received sync signal, the controller is arranged to perform a first operation which supplies power to the first shutter glass and the second shutter glass; a second operation which does not supply power to the first shutter glass and the second shutter glass, and a third operation and a fourth operation which do not supply power to the first shutter glass and supply power to the second shutter glass, respectively.

10. The glasses apparatus as claimed in claim 3 or any one of claims 3 to 9 when dependent on claim 3, wherein, when the display apparatus is arranged to display a plurality of 3D contents, the controller is arranged to receive an audio signal of a 3D content corresponding to the glasses apparatus from among the plurality of 3D contents, and output the received audio signal through the audio outputter.

11. The glasses apparatus as claimed in any one of claims 1 to 10, further comprising an inputter configured to receive user input,
wherein the controller is arranged to identify a display mode of the display apparatus according to the received user input, and to receive at least one from among a sync signal and an audio signal according to the identified display mode,
wherein the controller is arranged to control the supply of the power to the first shutter glass and the second shutter glass selectively.

12. A system comprising: at least one glasses apparatus according to any one of claims 1 to 11; and a display apparatus.

13. A system according to claim 12, wherein the display apparatus comprises:
a signal processor arranged to configure an image frame according to a display mode;
a display configured to output the image frame configured by the signal processor;
a pattern retarder configured to polarize the output image frame differently in each region;
a communicator configured to transmit at least one from among a sync signal and an audio signal to the at least one glasses apparatus, the at least one glasses apparatus configured to allow a user to view the image frame polarized differently in each region; and a controller configured to control to transmit at least one from among a sync signal and the audio signal to the at least one glasses apparatus according to the display mode.

14. A method for operating a glasses apparatus, the method comprising:
rotating optical axes of a first image and a second image which are output from a display apparatus, in different directions; and
selectively supplying power to a first shutter glass and a second shutter glass and changing polarization properties of the first image and the second image, the optical axes of which are rotated;
optionally further comprising:
receiving an audio signal from the display apparatus; and
outputting the received audio signal.

15. A display apparatus comprising:
a signal processor which configures an image frame according to a display mode;
a display configured to output the image frame configured by the signal processor;
a pattern retarder configured to polarize the output image frame differently in each region;
a communicator configured to transmit at least one from among a sync signal and an audio signal to a glasses apparatus, the glasses apparatus allowing a user to view the image frame polarized differently in each region; and
a controller configured to control to transmit at least one from among a sync signal and an audio signal to the glasses apparatus according to the display mode, wherein the display mode is one from among a 2D single view mode in which a single 2D content is displayed, a 2D multi view mode in which a plurality of 2D contents are displayed, a 3D single view mode in which a single 3D content is displayed, and a 3D multi view mode in which a plurality of 3D contents are displayed.
